(19) Europäisches Patentamt
European Patent Office
Office européen des brevets

(11) **EP 2 872 328 B1**

(12) **FASCICULE DE BREVET EUROPEEN**

(45) Date de publication et mention de la délivrance du brevet:
**29.06.2016 Bulletin 2016/26**

(21) Numéro de dépôt: **13744728.0**

(22) Date de dépôt: **11.07.2013**

(51) Int Cl.:
***B32B 17/10*** *(2006.01)* ***B60J 3/00*** *(2006.01)*
***G02B 5/02*** *(2006.01)* ***G02B 27/01*** *(2006.01)*

(86) Numéro de dépôt international:
**PCT/FR2013/051657**

(87) Numéro de publication internationale:
**WO 2014/009663 (16.01.2014 Gazette 2014/03)**

(54) **ÉLÉMENT TRANSPARENT A RÉFLEXION DIFFUSE COMPRENANT UNE COUCHE SOL-GEL**

TRANSPARENTES ELEMENT MIT DIFFUSER REFLEKTION UND MIT EINER SOL-GEL-SCHICHT

TRANSPARENT ELEMENT WITH DIFFUSE REFLECTION, COMPRISING A SOL-GEL LAYER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.07.2012 FR 1256760**

(43) Date de publication de la demande:
**20.05.2015 Bulletin 2015/21**

(73) Titulaire: **Saint-Gobain Glass France**
**92400 Courbevoie (FR)**

(72) Inventeurs:
• **EHRENSPERGER, Marie-Virginie**
**F-73100 Aix-les-bains (FR)**
• **GUILLEMOT, François**
**F-75019 Paris (FR)**

(74) Mandataire: **Baget, Astrid Marie**
**Saint-Gobain Recherche**
**Département Propriété Industrielle**
**39, Quai Lucien Lefranc**
**93300 Aubervilliers (FR)**

(56) Documents cités:
**WO-A1-2012/104547     US-A1- 2003 161 997**
**US-A1- 2009 316 262**

**Description**

La présente invention concerne un élément en couches transparent à propriété de réflexion diffuse.

L'élément en couches peut être rigide ou flexible. Il peut s'agir en particulier d'un vitrage, constitué par exemple à base de verre ou de matériau polymère. Il peut s'agir également d'un film flexible à base de matériau polymère, notamment apte à être rapporté sur une surface afin de lui conférer des propriétés de réflexion diffuse tout en préservant ses propriétés de transmission.

Les vitrages connus comprennent les vitrages transparents standards, qui donnent lieu à une transmission et une réflexion spéculaires d'un rayonnement incident sur le vitrage, et les vitrages translucides, qui donnent lieu à une transmission et une réflexion diffuses d'un rayonnement incident sur le vitrage.

De manière usuelle, la réflexion par un vitrage est dite diffuse lorsqu'un rayonnement incident sur le vitrage avec un angle d'incidence donné est réfléchi par le vitrage dans une pluralité de directions. La réflexion par un vitrage est dite spéculaire lorsqu'un rayonnement incident sur le vitrage avec un angle d'incidence donné est réfléchi par le vitrage avec un angle de réflexion égal à l'angle d'incidence. De manière analogue, la transmission à travers un vitrage est dite spéculaire lorsqu'un rayonnement incident sur le vitrage avec un angle d'incidence donné est transmis par le vitrage avec un angle de transmission égal à l'angle d'incidence.

Un inconvénient des vitrages transparents standards est qu'ils renvoient des reflets nets, à la manière de miroirs, ce qui n'est pas souhaitable dans certaines applications. Ainsi, lorsqu'un vitrage est utilisé pour une fenêtre de bâtiment ou un écran d'affichage, il est préférable de limiter la présence de reflets, qui réduisent la visibilité à travers le vitrage. Des reflets nets sur un vitrage peuvent également générer des risques d'éblouissement, avec des conséquences en termes de sécurité, par exemple lorsque des phares de véhicules se reflètent sur des façades vitrées de bâtiments. Ce problème se pose tout particulièrement pour les façades vitrées d'aéroports. Il est en effet essentiel de supprimer tout risque d'éblouissement des pilotes à l'approche des terminaux.

Par ailleurs, les vitrages translucides, s'ils ont l'avantage de ne pas générer de reflets nets, ne permettent toutefois pas d'avoir une vision claire à travers le vitrage.

C'est à ces inconvénients qu'entend plus particulièrement remédier l'invention en proposant un élément en couches permettant à la fois d'avoir une excellente vision nette à travers l'élément, de limiter les réflexions de type "miroir" sur l'élément, et de favoriser les réflexions diffuses sur l'élément.

Le demandeur a découvert que l'utilisation d'un élément en couches transparent à réflexion diffuse particulier utilisé dans un vitrage permet d'obtenir un vitrage transparent en transmission et présentant une réflexion diffuse. Ces propriétés sont notamment obtenues grâce à un empilement particulier de couches présentant des indices de réfraction et une géométrie définis. En résumé, l'élément en couches comprend une couche centrale constituée en des matériaux diélectriques ou métalliques, de préférence une couche mince ou un empilement de couches minces, encadrée(s) par deux couches externes, une couche externe supérieure et une couche externe inférieure constituées en des matériaux diélectriques présentant sensiblement le même indice de réfraction. Dans cet élément en couches, chaque surface de contact ($S_0$, $S_1$, ..., $S_k$) entre deux couches adjacentes de l'élément en couches qui sont l'une diélectrique et l'autre métallique, ou qui sont deux couches diélectriques d'indices de réfraction différents, est texturée et parallèle aux autres surfaces de contact texturées entre deux couches adjacentes qui sont l'une diélectrique l'autre métallique ou qui sont deux couches diélectriques d'indices de réfraction différents.

Le demandeur a découvert que les propriétés avantageuses de l'élément en couches de l'invention sont dues en particulier à l'accord d'indice entre les couches externes, c'est-à-dire au fait que ces deux couches ont sensiblement le même indice de réfraction. Selon l'invention, l'accord d'indice ou écart d'indice correspond à la valeur absolue de la différence d'indice de réfraction à 589 nm entre les matériaux diélectriques constitutifs des deux couches externes de l'élément en couches. Plus l'écart d'indice est faible, plus la vision sera nette au travers du vitrage. Le demandeur a découvert que l'on obtient une excellente vision avec un accord d'indice inférieur à 0,050, de préférence inférieur à 0,030 et mieux inférieur à 0,015.

Plusieurs configurations et procédés de préparation pour l'élément en couches sont envisageables variant notamment par le choix des matériaux constituant la couche externe inférieure et la couche centrale. La couche externe inférieure constituée de matériaux diélectriques est choisie parmi :

- les substrats transparents dont l'une des surfaces principales est texturée et l'autre lisse, de préférence les substrats en verre minéral ou organique, choisis parmi les polymères, les verres, les céramiques,
- les couches de matériau diélectrique, par exemple déposé par magnétron, choisies parmi les oxydes, nitrures ou halogénures d'un ou plusieurs métaux de transition, non-métaux ou métaux alcalino-terreux,
- les couches à base de matériaux durcissables initialement dans un état visqueux, liquides ou pâteux adaptés à des opérations de mise en forme comprenant :

  - les matériaux photoréticulables et/ou photopolymérisables,

- les couches déposées par un procédé sol-gel,

- les intercalaires ou feuillets de matière plastique thermoformable ou sensible à la pression pouvant être de préférence à base de polymères choisis parmi les polybutyrales de vinyle (PVB), les polychlorures de vinyle (PVC), les polyuréthanes (PU), les polyéthylènes téréphtalates (PET) ou les copolymères d'éthylène-acétate de vinyle (EVA).

Parmi ces matériaux, certains sont particulièrement intéressants au regard de leur disponibilité et/ou de leur prix, par exemple, les substrats rugueux ou texturés en verre de type Satinovo® commercialisé par Saint-Gobain.

Comme expliqué ci-dessus, pour obtenir une vision particulièrement nette au travers du vitrage, la variation d'indice de réfraction entre la couche externe inférieure constituée d'un substrat rugueux et le matériau constituant la couche externe supérieure de l'élément en couches est de préférence inférieure à 0,050, et mieux inférieure à 0,015.

Cependant, parmi les matériaux proposés pour constituer les couches externes supérieures, il n'est pas toujours possible d'obtenir une variation d'indice aussi faible que 0,015. Par exemple, pour les verres standards, l'indice d'un verre de même type peut varier d'une usine à l'autre entre 1,517 et 1,523. Cette variation de l'ordre de 0,006 est non négligeable devant la gamme d'acceptation d'écart d'indice préférentielle pour un vitrage comprenant l'élément transparent à réflexion diffuse.

Par conséquent, lorsqu'un substrat de verre texturé est choisi comme couche externe inférieure, il n'est pas possible, si on recherche une excellente netteté, de choisir pour couche externe supérieure tous types de matériaux de la liste donnée ci-dessus pour les couches externes inférieures.

Le demandeur a découvert de façon surprenante que l'utilisation spécifique d'une couche sol-gel particulière comme couche externe supérieure de l'élément en couches permet de préparer facilement des éléments en couches transparents à réflexion diffuse avec des accords d'indice pouvant être notamment inférieurs à 0,015. La couche sol-gel de l'invention présente, en fonction des proportions des différents composés précurseurs la constituant, un indice de réfraction adaptable pouvant notamment varier dans une gamme allant de 1,459 à 1,700, de préférence 1,502 à 1,538.

Grâce à la solution de l'invention, il est donc possible d'adapter avec précision l'indice de réfraction de façon à s'assurer que l'écart d'indice entre la couche externe inférieure et la couche externe supérieure soit inférieur à une valeur définie.

La formulation flexible en terme d'indice de la couche sol-gel de l'invention permet d'obtenir des éléments en couches transparents présentant une qualité constante en terme de performance optique, peu importe la provenance du substrat ou la nature du substrat. De plus, il est également possible d'utiliser comme couche externe inférieure des substrats en plastique ayant un indice significativement plus élevé.

Le choix spécifique d'une couche sol-gel comme couche externe supérieure de l'élément en couches permet de :

- s'accorder précisément sur l'indice de la couche externe inférieure alors que cela n'est pas possible avec d'autres types de couche externe,
- de s'adapter à l'indice précis du verre en fonction de sa provenance,
- d'obtenir une composition ajustable en fonction de la nature de la couche externe inférieure qu'elle soit minérale ou organique,
- de rajouter une composante donnant un aspect coloré à la couche sol-gel,
- d'appliquer la couche externe sur des surfaces complexes de tailles diverses et sans nécessiter d'équipement lourd ;
- d'obtenir des dépôts homogènes en surface, en composition et en épaisseur.

A cet effet, l'invention a pour objet un élément en couches (1) transparent ayant deux surfaces principales externes (2A, 4A) lisses, caractérisé en ce que l'élément en couche comprend :

- deux couches externes, une couche externe inférieure (2) et une couche externe supérieure (4), qui forment chacune une des deux surfaces principales externes (2A, 4A) de l'élément en couches et qui sont constituées en des matériaux diélectriques ayant sensiblement le même indice de réfraction (n2, n4), et
- une couche centrale (3) intercalée entre les couches externes, cette couche centrale (3) étant formée soit par une couche unique qui est une couche diélectrique d'indice de réfraction (n3) différent de celui des couches externes ou une couche métallique, soit par un empilement de couches ($3_1$, $3_2$, ..., $3_k$) qui comprend au moins une couche diélectrique d'indice de réfraction différent de celui des couches externes ou une couche métallique,

où chaque surface de contact ($S_0$, $S_1$, ..., $S_k$) entre deux couches adjacentes de l'élément en couches qui sont l'une diélectrique et l'autre métallique, ou qui sont deux couches diélectriques d'indices de réfraction différents, est texturée et parallèle aux autres surfaces de contact texturées entre deux couches adjacentes qui sont l'une diélectrique l'autre métallique ou qui sont deux couches diélectriques d'indices de réfraction différents, et où la couche externe supérieure (4) est une couche sol-gel comprenant une matrice hybride organique/inorganique à base de silice.

L'élément en couches particulier utilisé selon l'invention permet d'obtenir une transmission spéculaire d'un rayonnement incident sur l'élément en couches et une réflexion diffuse d'un rayonnement quelle que soit la direction de la source.

L'extrême netteté de la vision est due à l'accord d'indice le plus ajusté possible.

Dans le cadre de l'invention, on distingue les couches métalliques, d'une part, pour lesquelles la valeur de l'indice de réfraction est indifférente, et les couches diélectriques, d'autre part, pour lesquelles la différence d'indice de réfraction par rapport à celui des couches externes est à considérer.

Dans toute la description l'élément en couches transparent selon l'invention est considéré posé horizontalement, avec sa première face orientée vers le bas définissant une surface principale externe inférieure et sa seconde face, opposée à la première face, orientée vers le haut définissant une surface principale externe supérieure ; les sens des expressions " au-dessus " et " en-dessous " sont ainsi à considérer par rapport à cette orientation. A défaut de stipulation spécifique, les expressions " au-dessus " et " en-dessous " ne signifient pas nécessairement que les deux couches sont disposées au contact l'un de l'autre. Les termes " inférieur " et " supérieur " sont utilisés ici en référence à ce positionnement.

L'élément en couches comprend éventuellement au moins une couche additionnelle positionnée au-dessus ou en-dessous des couches externes supérieure et/ou inférieure. La ou lesdites couches additionnelles peuvent être constituées en des matériaux diélectriques ayant tous sensiblement le même indice de réfraction que les matériaux diélectriques des couches externes de l'élément en couches ou ayant des indices de réfraction différents.

Au sens de l'invention, le terme « indice » fait référence à l'indice optique de réfraction, mesuré à la longueur d'onde de 589 nm.

Selon l'invention, une couche mince est une couche d'épaisseur inférieure à 1 $\mu$m.

Deux matériaux ou couches diélectriques ont sensiblement le même indice de réfraction, ou ont leurs indices de réfraction sensiblement égaux, lorsque les deux matériaux diélectriques ont des indices de réfraction dont la valeur absolue de la différence entre leurs indices de réfraction à 589 nm est inférieure ou égale à 0,150.

Selon l'invention, la valeur absolue de la différence d'indice de réfraction à 589 nm entre les matériaux diélectriques constitutifs des deux couches externes de l'élément en couches est par ordre de préférence croissant : inférieure ou égale à 0,050, inférieur ou égale à 0,030, inférieur ou égale à 0,020, inférieure ou égale à 0,018, inférieure ou égale à 0,015, inférieure ou égale à 0,010, inférieure ou égale à 0,005.

Deux matériaux ou couches diélectriques ont des indices de réfraction différents lorsque la valeur absolue de la différence entre leurs indices de réfraction à 589 nm est strictement supérieure à 0,15. Selon une caractéristique avantageuse, la valeur absolue de la différence d'indice de réfraction à 589 nm entre, d'une part, les couches externes et, d'autre part, au moins une couche diélectrique de la couche centrale, est supérieure ou égale à 0,3, de préférence supérieure ou égale à 0,5, encore de préférence supérieure ou égale à 0,8. Cette différence d'indice de réfraction relativement importante intervient au niveau d'au moins une surface de contact texturée interne à l'élément en couches. Cela permet de favoriser la réflexion de rayonnement sur cette surface de contact texturée, c'est-à-dire une réflexion diffuse du rayonnement par l'élément en couches.

La surface de contact entre deux couches adjacentes est l'interface entre les deux couches adjacentes.

Un matériau ou couche diélectrique est un matériau ou une couche non métallique. De préférence, les matériaux ou couches diélectriques sont de nature organique ou minérale. Les matériaux ou couches diélectriques minérales peuvent être choisis parmi les oxydes, nitrures ou halogénures d'un ou plusieurs métaux de transition, non-métaux ou métaux alcalino-terreux choisis de préférence parmi le silicium, le titane, l'étain, le zinc, l'aluminium, le molybdène, le niobium, le zirconium, le magnésium. Les matériaux ou couches diélectriques organiques sont choisis parmi les polymères.

On considère qu'un matériau ou couche diélectrique est un matériau ou une couche de conductivité électrique faible, de préférence inférieure à 100 S/m.

Un élément transparent est un élément à travers lequel il y a une transmission de rayonnement au moins dans les domaines de longueurs d'onde utiles pour l'application visée de l'élément. A titre d'exemple, lorsque l'élément est utilisé en tant que vitrage de bâtiment ou de véhicule, il est transparent au moins dans le domaine de longueurs d'onde du visible.

Une surface texturée ou rugueuse est une surface pour laquelle les propriétés de surface varient à une échelle plus grande que la longueur d'onde du rayonnement incident sur la surface. Le rayonnement incident est alors transmis et réfléchi de manière diffuse par la surface. De préférence, une surface texturée ou rugueuse selon l'invention présente un paramètre de rugosité correspondant à l'écart moyen arithmétique Ra d'au moins 0,5 $\mu$m, notamment compris entre 1 et 100 $\mu$m et mieux entre 1 et 5 $\mu$m (correspondant à la moyenne arithmétique de toutes les distances absolues du profil de rugosité R mesurée à partir d'une ligne médiane du profil sur une longueur d'évaluation).

Une surface lisse est une surface pour laquelle les irrégularités de surface sont telles que le rayonnement n'est pas dévié par ces irrégularités de surface. Le rayonnement incident est alors transmis et réfléchi de manière spéculaire par la surface. De préférence, une surface lisse est une surface pour laquelle les irrégularités de surface sont de dimensions inférieures à la longueur d'onde du rayonnement incident sur la surface. Toutefois, selon l'invention, les surfaces de couches externes ou de couches additionnelles qui présentent certaines irrégularités de surface mais qui sont au contact d'une ou plusieurs couches additionnelles constituées en des matériaux diélectriques ayant sensiblement le même indice de réfraction et qui présentent, sur leur face opposée à celle en contact avec ladite couche présentant certaines irrégularités, une surface pour laquelle les irrégularités de surface sont de dimensions très inférieures ou très supérieures (ondulations à grande échelle) à la longueur d'onde du rayonnement incident sur la surface sont considérées comme lisses. De préférence, une surface lisse est une surface présentant soit un paramètre de rugosité correspondant à l'écart moyen arithmétique Ra inférieur à $0,10\ \mu m$, de préférence inférieure à $0,01\ \mu m$, soit des pentes inférieures à 10°.

Un vitrage correspond à un substrat transparent organique ou minéral.

Grâce à l'invention, on obtient une transmission spéculaire et une réflexion diffuse d'un rayonnement incident sur l'élément en couches. La transmission spéculaire garantit une vision nette à travers l'élément en couches. La réflexion diffuse permet d'éviter les reflets nets sur l'élément en couches et les risques d'éblouissement.

La réflexion diffuse sur l'élément en couches provient de ce que chaque surface de contact entre deux couches adjacentes qui sont l'une diélectrique et l'autre métallique, ou qui sont deux couches diélectriques d'indices de réfraction différents, est texturée. Ainsi, lorsqu'un rayonnement incident sur l'élément en couches atteint une telle surface de contact, il est réfléchi par la couche métallique ou du fait de la différence d'indice de réfraction entre les deux couches diélectriques et, comme la surface de contact est texturée, la réflexion est diffuse.

La transmission spéculaire provient de ce que les deux couches externes de l'élément en couches ont des surfaces principales externes lisses et sont constituées en des matériaux ayant sensiblement le même indice de réfraction, et de ce que chaque surface de contact texturée entre deux couches adjacentes de l'élément en couches qui sont l'une diélectrique et l'autre métallique, ou qui sont deux couches diélectriques d'indices de réfraction différents, est parallèle aux autres surfaces de contact texturées entre deux couches adjacentes qui sont l'une diélectrique et l'autre métallique ou qui sont deux couches diélectriques d'indices de réfraction différents.

Les surfaces externes lisses de l'élément en couches permettent une transmission spéculaire de rayonnement à chaque interface air/couche externe, c'est-à-dire permettent l'entrée d'un rayonnement depuis l'air dans une couche externe, ou la sortie d'un rayonnement depuis une couche externe dans l'air, sans modification de la direction du rayonnement.

Le parallélisme des surfaces de contact texturées implique que la ou chaque couche constitutive de la couche centrale qui est diélectrique d'indice de réfraction différent de celui des couches externes, ou qui est métallique, présente une épaisseur uniforme perpendiculairement aux surfaces de contact de la couche centrale avec les couches externes.

Cette uniformité de l'épaisseur peut être globale sur toute l'étendue de la texture, ou locale sur des tronçons de la texture. En particulier, lorsque la texture présente des variations de pente, l'épaisseur entre deux surfaces de contact texturées consécutives peut changer, par tronçon, en fonction de la pente de la texture, les surfaces de contact texturées restant toutefois toujours parallèles entre elles. Ce cas se présente notamment pour une couche déposée par pulvérisation cathodique, où l'épaisseur de la couche est d'autant plus faible que la pente de la texture augmente. Ainsi, localement, sur chaque tronçon de texture ayant une pente donnée, l'épaisseur de la couche reste constante, mais l'épaisseur de la couche est différente entre un premier tronçon de texture ayant une première pente et un deuxième tronçon de texture ayant une deuxième pente différente de la première pente.

De manière avantageuse, afin d'obtenir le parallélisme des surfaces de contact texturées à l'intérieur de l'élément en couches, la couche ou chaque couche constitutive de la couche centrale est une couche déposée par pulvérisation cathodique. En effet, la pulvérisation cathodique, en particulier la pulvérisation cathodique assistée par un champ magnétique, garantit que les surfaces délimitant la couche soient parallèles entre elles, ce qui n'est pas le cas d'autres techniques de dépôt telles que l'évaporation ou le dépôt chimique en phase vapeur (CVD), ou encore le procédé sol-gel. Or, le parallélisme des surfaces de contact texturées à l'intérieur de l'élément en couches est essentiel pour obtenir une transmission spéculaire à travers l'élément.

Un rayonnement incident sur une première couche externe de l'élément en couches traverse cette première couche externe sans modification de sa direction. Du fait de la différence de nature, diélectrique ou métallique, ou de la différence d'indice de réfraction entre la première couche externe et au moins une couche de la couche centrale, le rayonnement est ensuite réfracté dans la couche centrale. Comme, d'une part, les surfaces de contact texturées entre deux couches adjacentes de l'élément en couches qui sont l'une diélectrique et l'autre métallique, ou qui sont deux couches diélectriques d'indices de réfraction différents, sont toutes parallèles entre elles et, d'autre part, la deuxième couche externe a sensiblement le même indice de réfraction que la première couche externe, l'angle de réfraction du rayonnement dans la deuxième couche externe à partir de la couche centrale est égal à l'angle d'incidence du rayonnement sur la couche centrale à partir de la première couche externe, conformément à la loi de Snell-Descartes pour la réfraction.

Le rayonnement ressort donc de la deuxième couche externe de l'élément en couches selon une direction qui est la même que sa direction d'incidence sur la première couche externe de l'élément. La transmission du rayonnement par l'élément en couches est ainsi spéculaire. On obtient donc ainsi une vision claire à travers l'élément en couches, c'est-à-dire sans que l'élément en couches soit translucide, grâce aux propriétés de transmission spéculaire de l'élément en couches.

Selon un aspect de l'invention, on tire parti des propriétés de réflexion diffuse de l'élément en couches pour réfléchir une grande partie du rayonnement, dans une pluralité de directions, du côté d'incidence du rayonnement. Cette forte réflexion diffuse est obtenue tout en ayant une vision claire à travers l'élément en couches, c'est-à-dire sans que l'élément en couches soit translucide, grâce aux propriétés de transmission spéculaire de l'élément en couches. Un tel élément en couches transparent à forte réflexion diffuse trouve application, par exemple, pour des écrans d'affichage ou de projection.

La couche externe supérieure est une couche sol-gel comprenant une matrice hybride organique/inorganique à base de silice obtenue selon un procédé sol-gel.

Le procédé sol-gel consiste, dans un premier temps, à préparer une solution dite « solution sol-gel » contenant des précurseurs qui donnent lieu en présence d'eau à des réactions de polymérisation. Lorsque cette solution solgel est déposée sur une surface, de par la présence d'eau dans la solution solgel ou au contact de l'humidité ambiante, les précurseurs s'hydrolysent et se condensent pour former un réseau emprisonnant le solvant. Ces réactions de polymérisation entraînent la formation d'espèces de plus en plus condensées, qui conduisent à des particules colloïdales formant des sols puis des gels. Le séchage et la densification de ces gels, à une température de l'ordre de quelques centaines de degrés, conduit, en présence de précurseur à base de silice, à une couche sol-gel correspondant à un verre dont les caractéristiques sont semblables à celles d'un verre classique.

Du fait de leur viscosité, les solutions sol-gel, sous forme d'une solution colloïdale ou d'un gel, peuvent être déposées de manière aisée sur la surface principale texturée de la couche centrale opposée à la première couche externe, en se conformant à la texture de cette surface. La couche sol-gel va venir « combler » la rugosité de la couche centrale. En effet, cette couche comprend une surface épousant la rugosité de surface de la couche centrale qui est ainsi texturée et une surface principale externe opposée à cette surface qui est plane. Les couches déposées par un procédé sol-gel assurent donc une planarisation de la surface de l'élément en couches.

Selon l'invention, la couche sol-gel comprend une matrice hybride organique/inorganique à base de silice. Cette matrice est obtenue à partir de précurseurs mixtes qui sont des organosilanes $R_nSiX_{(4-n)}$. Ces molécules comportent simultanément des fonctions hydrolysables qui donnent naissance à un réseau ou matrice de silice comprenant des fonctions organiques qui restent fixées sur le squelette de silice.

Selon une variante de l'invention, la couche sol-gel comprend en outre des particules d'au moins un oxyde métallique ou d'au moins un chalcogénure.

Selon une autre variante de l'invention, la matrice hybride organique/inorganique à base de silice comprend en outre au moins un oxyde métallique. Une telle matrice à base de silice comprenant des fonctions organiques et au moins un oxyde métallique peut être obtenue à partir de l'utilisation conjointe d'organosilane et d'au moins un précurseur d'un oxyde métallique. Ces précurseurs forment alors avec l'organosilane une matrice hybride de silice et d'oxyde métallique.

Selon le mode de réalisation préféré de l'invention, la couche sol-gel comprend une matrice hybride organique/inorganique à base de silice et d'au moins un oxyde métallique dans laquelle sont dispersées des particules d'au moins un oxyde métallique ou d'au moins un chalcogénure telle qu'une matrice hybride organique/inorganique de silice et d'oxyde de zirconium dans laquelle sont dispersées des particules de dioxyde de titane.

Les composés principaux de la couche sol-gel de l'invention sont constitués des composés formant la matrice et des particules dispersées dans ladite matrice. Les composés principaux de la couche sol-gel peuvent donc être :

- la silice comprenant des fonctions organiques de la matrice,
- le ou les oxydes métalliques de la matrice,
- les particules d'oxydes métalliques et/ou de chalcogénures dispersées dans la matrice.

Pour adapter avec précision l'indice de réfraction de la couche sol-gel, on modifie les proportions d'oxydes métalliques provenant de la matrice ou dispersées sous forme de particules. En règle générale, les oxydes métalliques ont un indice de réfraction plus élevé que celui de la silice. En augmentant les proportions d'oxyde métallique, on augmente l'indice de réfraction de la couche sol-gel. L'indice de réfraction de la couche sol-gel augmente de manière linéaire en fonction de la fraction volumique d'un type d'oxyde métallique pour des proportions en volume dudit oxyde métallique inférieures à une valeur seuil. Par exemple, lorsque l'on ajoute des particules de $TiO_2$, on observe une variation linéaire de l'indice de réfraction de la couche sol-gel pour des proportions en volume de $TiO_2$ par rapport au volume total des composés principaux de la couche sol-gel inférieures à 20%.

Il est donc possible de déterminer théoriquement l'indice de réfraction d'une couche sol-gel en fonction des composés principaux la constituant et ainsi de déterminer théoriquement la formulation d'une solution sol-gel qui permettra d'obtenir après durcissement à une couche sol-gel présentant l'indice de réfraction requis.

La solution de l'invention est donc particulièrement avantageuse. Par exemple, à réception de substrats de verre destinés à être utilisés comme couche externe inférieure, on mesure leur indice de réfraction. Puis, on formule une solution sol-gel qui donnera après durcissement une couche sol-gel présentant un accord d'indice de réfraction avec ledit substrat inférieur à 0,015.

Les couches sol-gel peuvent avoir un indice de réfraction variant dans une large gamme d'indice notamment 1,459 à 1,700, de préférence 1,502 à 1,538 et mieux de 1,517 et 1,523.

Les composés principaux de la couche sol-gel représentent en masse par rapport à la masse totale de la couche sol-gel, par ordre de préférence croissant au moins 80%, au moins 90%, au moins 95%, au moins 99%, 100%.

La couche sol-gel comprend de préférence en masse par rapport à la masse totale des composés principaux constituant la couche sol-gel :

- 50 à 100%, de préférence 70 à 95% et mieux 85 à 90% de silice comprenant des fonctions organiques de la matrice, et/ou
- 0 à 10%, de préférence 1 à 5% et mieux 2 à 4% d'oxyde métallique de la matrice, et/ou
- 0 à 40%, de préférence 1 à 20%, et mieux 5 à 15% de particules d'oxydes métalliques et/ou de chalcogénures dispersées dans la matrice.

Les proportions volumiques des particules d'oxydes métalliques sur le volume total des composés principaux de la couche sol-gel est par ordre de préférence croissant compris entre 0 et 25%, entre 1 et 15%, entre 2 et 8%.

La couche sol-gel est obtenue par durcissement d'une solution sol-gel et comprend le produit résultant de l'hydrolyse et de la condensation d'au moins un organosilane de formule générale $R_nSiX_{(4-n)}$ dans laquelle :

- n égal à 1, 2, 3, de préférence n égal 1 ou 2 et mieux n égal 1,
- les groupes X, identiques ou différents, représentent des groupes hydrolysables choisis parmi les groupe alcoxy, acyloxy ou halogénure, de préférence alcoxy, et
- les groupes R, identiques ou différents, représentent des groupes organiques (ou fonctions organiques) non hydrolysables liés au silicium par un atome de carbone.

De préférence, la couche sol-gel est obtenue par durcissement d'une solution sol-gel et comprend le produit résultant de l'hydrolyse et de la condensation de :

i) au moins un organosilane et
ii) au moins un précurseur d'un oxyde métallique et/ ou
iii) des particules d'au moins un oxyde métallique ou d'au moins un chalcogénure.

Les particules d'oxyde métallique et/ou les précurseurs des oxydes métalliques de la matrice hybride organique/inorganique comprennent un métal choisi parmi le titane, zirconium, le zinc, le niobium, l'aluminium et le molybdène.

Le ou les organosilanes comprennent 2 ou 3, en particulier 3, groupes hydrolysables X, et un ou deux, en particulier un, groupe non hydrolysable R.

Les groupes X sont préférentiellement choisis parmi les groupes alcoxy-O-R', en particulier alcoxy en C1-C4, acyloxy -O-C(O)R' où R' est un radical alkyle, préférentiellement en C1-C6, de préférence méthyle ou éthyle, halogénure tels que Cl, Br et I, et les combinaisons de ces groupes. De préférence, les groupes X sont des groupes alcoxy, et en particulier méthoxy ou éthoxy.

Le groupe R est un groupe hydrocarboné non hydrolysable. Un certain nombre de groupes conviennent selon l'invention. La présence et la nature de ces groupes permet d'obtenir des couches sol-gel présentant des épaisseurs compatibles avec les applications de l'invention. De préférence, le groupe R correspondant à la fonction organique non hydrolysable présente une masse molaire d'au moins 50 g/mol, de préférence d'au moins 100 g/mol. Ce groupe R est donc un groupe non éliminable, même suite à l'étape de séchage et peut être choisi parmi :

- les groupes alkyle, de préférence les groupes alkyle linéaires ou ramifiés en C1 à C10, de préférence encore en C3 à C10, tels que par exemple les groupes méthyle, éthyle, propyle, n- butyle, i-butyle, sec-butyle et tertiobutyle ;
- les groupes alcényle, de préférence les groupes alcényle en C2 à C10, tels que par exemple les groupes vinyle, 1-propényle, 2-propényle et butényle ;
- les groupes alcinyles tels que par exemple les groupes acétylényle et propargyle ;
- les groupes aryle, de préférence les groupes aryle en C6 à C10, tels que les groupes phényle et naphtyle ;
- les groupes alkyl-aryle ;
- les groupes aryl-alkyle ;
- les groupes (méth)acryle et (méth)acryloxy-propyle ;

- les groupes glycidyle et glycidyloxy.

Les groupes définis ci-dessus tels que les groupes alkyle, alcényle, alcynyle, alkylaryle, arylalkyle, peuvent comprendre en outre au moins un groupe choisi parmi les groupes amine primaire, secondaire ou tertiaire (le radical non hydrolysable est alors par exemple un groupe aminoaryle ou aminoalkyle), amide, alkylcarbonyle, anilino substitué ou non substitué, aldéhyde, cétone, carboxyle, anhydride, hydroxyle, alcoxy, alcoxycarbonyle, mercapto, cyano, hydroxyphényle, alkyl carboxylate, acide sulfonique, acide phosphorique, meth(acryloxyloxy), les groupes comprenant un cycle époxyde tels que glycidyle et glycidiloxy, allyle, vinyle.

Les organosilanes particulièrement préférés comprennent des groupes X identiques ou différents les uns des autres, de préférence identiques, et représentent un groupe hydrolysable, de préférence un groupe alcoxy en C1 à C4, de préférence encore un groupe éthoxy ou méthoxy ; et R est un groupe non hydrolysable, de préférence un groupe glycidyle ou glycidyloxy-alkylène en C1 à C20, de préférence en C1 à C6, par exemple un groupe glycidyloxypropyle, un groupe glycidyloxyéthyle, un groupe glycidyloxybutyle, un groupe glycidyloxypentyle, un groupe glycidyloxyhexyle et un groupe 2-(3,4-epoxycyclohexyl)éthyle.

Avantageusement, le composé organosilane est choisi parmi les composés suivants : allyltriméthoxysilane, N-(2-aminoéthyl)-3-aminopropyltriméthoxysilane, N-[N'-(2'-aminoéthyl)-2-aminoéthyl]-3-aminopropyl-triméthoxysilane, 3-aminopropyltriméthoxysilane, 3-glycidoxypropyltriméthoxysilane (GLYMO), 3-mercaptopropyltriméthoxysilane, 3-méthacryloxypropylméthyldiméthoxysilane, 3-méthacryloxypropyltriméthoxysilane, N-phénylaminopropyltriméthoxysilane, vinyltriméthoxysilane, 3-aminopropyltriéthoxysilane, p-aminophénylsilane, 3-aminopropyltriéthoxysilane, 3-glycidoxypropyldiisopropyléthoxysilane, 3-glycidoxypropyltriéthoxysilane, (3-glycidoxypropyl) méthyldiéthoxysilane, 3-mercaptopropyltriéthoxysilane, 3-méthacryloxypropylméthyldiéthoxysilane, vinylméthyldiéthoxysilane, vinyltriéthoxysilane, N-[(3-(triéthoxysilyl)-propyl]-4,5-dihydroximidazole.

Parmi les composés énumérés ci-dessus, le composé préféré est le GLYMO.

Les particules d'oxyde métallique et/ou de chalcogénure dispersées dans la matrice hybride organique/inorganique à base de silice sont de préférence choisis dans le groupe suivant : $TiO_2$, $ZrO_2$, ZnO, NbO, $SnO_2$, $Al_2O_3$, $MoO_3$, ZnS, ZnTe, CdS, CdSe, $IrO_2$, $WO_3$, $Fe_2O_3$, $FeTiO_3$, $BaTi_4O_s$, $SrTiO_3$, $ZrTiO_4$, $Co_3O_4$, oxyde ternaire à base de bismuth, $MoS_2$, $RuO_2$, $Sb_2O_4$, $Sb_2O_5$, $BaTi_4O_9$, MgO, $CaTiO_3$, $V_2O_5$, $Mn_2O_3$, $CeO_2$, $RuS_2$, $Y_2O_3$, $La_2O_3$.

De préférence, les particules sont des particules d'oxyde métallique comprenant un métal choisi parmi le titane, le zirconium, le zinc, le niobium, l'aluminium et le molybdène.

Selon un mode de réalisation particulièrement avantageux, l'oxyde métallique est un oxyde de titane ($TiO_2$), sous forme rutile ou anatase ou un oxyde de zirconium ($ZrO_2$).

Les particules d'au moins un oxyde métallique ou d'au moins un chalcogénure ont, par ordre de préférence croissant, un diamètre moyen inférieur ou égal à 1 $\mu$m, inférieur ou égal à 60 nm, inférieur ou égal à 50nm, inférieur ou égal à 20 nm. Les particules ont en général un diamètre supérieur à 1 nm et même supérieur à 5 nm.

L'indice de réfraction des oxydes métalliques des chalcogénure est par ordre de préférence croissant, supérieur à 1,49, supérieur à 1,50, supérieur à 1,60, supérieur à 1,70, supérieur à 1,80, supérieur 1,90, supérieur à 2,00, supérieur à 2,10, supérieur à 2,20.

A titre de produit commercial utilisable, on peut citer le produit commercialisé sous la dénomination Optolake 1120Z® (11RU7-A-8) par la société Catalyst & Chemical (CCIC) correspondant à un colloïde de $TiO_2$. On peut citer également le produit commercialisé par la société Cristal Global sous la référence S5-300A correspondant à une dispersion aqueuse stable de particules de $TiO_2$ à 23% en masse par rapport à la masse totale de la dispersion, présentant une surface spécifique BET d'environ 330 $m^2$/g et un diamètre moyen de l'ordre de 50 nm.

Les précurseurs des oxydes métalliques peuvent être choisis parmi les composés métallo-organique tels que les alcoxydes métalliques, les sels métalliques, lesquels comprennent les éléments métalliques.

Les précurseurs des oxydes métalliques peuvent comprendre un métal choisi parmi le titane, le zirconium, le zinc, le niobium, l'aluminium et le molybdène. De préférence, la solution sol-gel comprend au moins un précurseur d'oxyde de zirconium, d'aluminium, ou de titane, de préférence un alcoxyde métallique ou un halogénure métallique. Des exemples de composés précurseurs sont les suivants :

- $Al(OCH_3)_3$, $Al(OC_2H_5)_3$, $Al(OC_3H_7)_3$, $Al(OC_4H_9)_3$, $Al(OC_2H_4OC_4H_9)_3$, $AlCl_3$, $AlCl(OH)_2$,
- $TiCl_4$, $Ti(OC_2H_5)_4$, $Ti(OC_3H_7)_4$, $Ti(OC_4H_9)_4$, $Ti(2\text{-éthylhexoxy})_4$,
- $ZrCl_4$, $Zr(OC_2H_5)_4$, $Zr(OC_3H_7)_4$, $ZrOCl_2$, $Zr(2\text{-éthylhexoxy})_4$.

De manière préférée, la solution sol-gel selon l'invention comprend un seul composé choisi parmi les alcoxydes de zirconium, tels que le tétrapropoxide de zirconium (TPOZ).

Les organosilanes (i), les précurseurs d'oxydes métalliques (ii) et les oxydes métalliques et chalcogénure (iii) sont les composés principaux de la solution sol-gel. La solution sol-gel comprend outre ces produits dits principaux, des additifs et des solvants. Les additifs représentent de préférence moins de 10%, de préférence moins de 5% en masse par rapport à la masse totale de la solution sol-gel.

Les proportions d'organosilanes, en masse par rapport à la masse totale des composants principaux de la solution sol-gel sont comprises, par ordre de préférence croissant, entre 50 et 99%, entre 60% et 98%, entre 70 et 95%, entre 80 et 90%.

Les proportions des précurseurs d'oxydes métalliques, en masse par rapport à la masse totale des composants principaux de la solution sol-gel sont comprises, par ordre de préférence croissant, entre 0 et 10%, entre 1 et 10%, entre 2 et 8%, entre 4 et 7%.

Les proportions des oxydes métalliques et de chalcogénures, en masse par rapport à la masse totale des composants principaux de la solution sol-gel sont comprises, par ordre de préférence croissant, entre 0 et 40%, entre 1 et 20%, entre 2 et 10%, entre 4 et 9%.

La solution sol-gel peut comprendre en plus des composés principaux, au moins un solvant et éventuellement au moins un additif.

Les solvants sont choisis parmi l'eau et les solvants organiques. La solution sol-gel comporte de préférence de l'eau pour permettre les réactions d'hydrolyse et de condensation. La solution sol-gel peut comprendre, en outre, au moins un solvant organique dont le point d'ébullition, à pression atmosphérique, est de préférence compris entre 70 et 140°C. Comme solvant organique utilisable selon l'invention, on peut citer les alcools, les esters, les cétones, le tétrahydropyrane, et leurs mélanges. Les alcools sont de préférence choisis parmi les alcools en C1-C6, tels que le méthanol. Les esters sont de préférence choisis parmi les acétates, et on peut citer en particulier l'acétate d'éthyle. Parmi les cétones, on utilisera de préférence la méthyléthylcétone.

Parmi les solvants appropriés, on peut donc citer l'eau, le méthanol, l'éthanol, le propanol (le n-propanol et l'isopropanol), le butanol, le 1-méthoxy-2-propanol, le 4-hydroxy-4-méthyl-2-pentanone, le 2-méthyl-2-butanol, le butoxyéthanol et les mélange eau/solvants organiques.

Les proportions de solvant peuvent varier dans une large gamme. Elles dépendront notamment des épaisseurs à obtenir. En effet, plus la solution sol-gel présente un contenu solide élevé, plus il est possible de déposer des épaisseurs importantes et donc d'obtenir des couches sol-gel d'épaisseurs élevées.

Les proportions en masse de solvant par rapport à la masse totale de la solution sol-gel peuvent représenter par exemple au moins 10% et au plus 80%.

De même, les proportions en masse des composés principaux par rapport à la masse totale de la solution sol-gel représentent, par exemple au moins 20% et au plus 90%.

Les proportions en masse d'eau par rapport à la masse totale de la solution sol-gel représentent, par exemple, entre 10 et 40%, entre 10 et 30% ou entre 15 à 25%.

Lorsque la solution sol-gel comprend en outre un ou plusieurs solvants organiques, les proportions en masse de solvant organique par rapport à la masse totale de la solution sol-gel représentent, par exemple, entre 10 et 40%, entre 10 et 30% ou entre 15 à 25%.

La composition peut comprendre en outre divers additifs tels que des agents tensioactifs, des absorbeurs UV, des pigments ou colorants, des catalyseurs d'hydrolyse et/ou de condensation, des catalyseurs de durcissement. Les proportions totales des additifs représentent de préférence moins de 5% en masse par rapport à la masse totale de la solution sol-gel.

Les agents tensioactifs améliorent les propriétés de mouillage et favorisent un meilleur étalement de la composition sur la surface à revêtir. Parmi ces tensioactifs, on peut citer les tensioactifs non-ioniques tels que les alcools gras éthoxylés ou neutres par exemple les tensioactifs fluorés. On peut notamment citer à titre de tensioactif fluoré, le produit commercialisé par 3M sous la référence FC-4430.

Les proportions d'agents tensioactifs en masse par rapport à la masse totale de la solution sol-gel représentent, par ordre de préférence croissant, 0,01 à 5%, 0,05 à 3%, à 0,10 à 2,00%.

Les catalyseurs d'hydrolyse et/ou de condensation sont de préférences choisis parmi les acides ou les bases.

Les catalyseurs acides peuvent être choisis parmi les acides organiques, les acides minéraux, et leurs mélanges. Les acides organiques peuvent notamment être choisis parmi les acides carboxyliques tels que les acides monocarboxyliques aliphatiques comme l'acide acétique, les acides polycarboxyliques comme les acides dicarboxyliques et les acides tricarboxyliques par exemple l'acide citrique, et leurs mélanges. Parmi les acides minéraux, on peut utiliser l'acide nitrique, ou l'acide chlorhydrique et leurs mélanges.

L'acide acétique présente pour avantage supplémentaire, lorsque la composition comprend un précurseur d'oxyde métallique, d'assurer la fonction de stabilisant. En effet, l'acide acétique vient chélater ces précurseurs et prévient ainsi une hydrolyse trop rapide de ce type de produit.

Les catalyseurs basiques peuvent être choisis parmi les bases aminées telles que l'éthanolamine, la triéthylamine et leurs mélanges. On utilise une base en particulier dans le cas où les acides seraient à proscrire du fait de la nature du substrat ou du silane mis en oeuvre.

La solution peut comprendre en outre des pigments, colorants ou nacres. Selon ce mode de réalisation, les couches sol-gel peuvent présenter un aspect coloré. Une autre alternative pour obtenir cet aspect coloré consiste à choisir d'introduire dans la matrice de particules colloïdales des oxydes métalliques colorés tels que des particules d'oxyde de cobalt, de vanadium, de chrome, de manganèse, de fer, de nickel, de cuivre et de tous autres métaux de transition et de non métaux susceptibles de conférer ledit aspect coloré.

Le dépôt peut se faire selon l'une des techniques suivantes :

- le trempage-retrait (connu sous la terminologie anglaise « dip-coating ») ;
- l'enduction centrifuge (connue sous la terminologie anglaise « spin-coating ») ;
- l'enduction laminaire (connue sous la terminologie anglaise « laminar-flow-coating ou meniscus coating ») ;
- la pulvérisation (connue sous la terminologie anglaise « spray-coating ») ;
- l'épandage (connu sous la terminologie anglaise « soak-coating ») ;
- l'enduction au rouleau (connue sous la terminologie « roll-process ») ;
- l'enduction au pinceau (connue sous la terminologie anglaise « paint-coating ») ;
- la sérigraphie (connue sous la terminologie anglaise « screen-printing »).

Le dépôt est de préférence effectué par pulvérisation avec atomisation pneumatique.

La couche sol-gel vient combler la rugosité de la couche centrale assurant ainsi une planarisation de la surface de l'élément en couches. La texture de la surface principale externe de la couche centrale est formée par une pluralité de motifs en creux ou en saillie par rapport à un plan général de la surface de contact. L'épaisseur définie entre le creux le plus bas et la saillie ou crête la plus haute correspond à la valeur appelée pic à vallée (« Pic to valley »). L'épaisseur de la couche sol-gel doit être suffisante pour venir planariser la surface de la couche centrale et donc être au moins égale à la valeur pic à vallée de la texture de la couche centrale. L'épaisseur de la couche sol-gel est, de préférence, supérieure à la valeur pic à vallée de la couche centrale.

Selon l'invention, l'épaisseur de la couche sol-gel est définie à partir du creux le plus bas de la couche centrale. L'épaisseur de la couche sol-gel peut être comprise entre 5 nm et 100 $\mu$m, de préférence entre 50 nm et 50 $\mu$m. Cette épaisseur peut être obtenue en une seule couche, par une seule ou plusieurs opération d'application (ou passe), par des techniques telles que le trempage, l'aspersion ou la pulvérisation.

La température de séchage du film sol-gel, peut varier de 0 à 200°C, de préférence de 100°C à 150°C, de préférence encore de 120 à 170°C.

De manière avantageuse, le dispositif de l'invention permet d'obtenir :

- une transmission lumineuse variable en fonction du choix de la couche centrale et de l'épaisseur de la couche externe inférieure,
- un flou en transmission mesuré selon la norme ASTM D 1003 inférieur à 5%, de préférence inférieur à 2,5 et mieux inférieur à 1%,
- une clarté mesurée au Haze-Gard plus de BYK supérieure à 93%, de préférence supérieur à 95% et mieux supérieure à 97%.

Selon un aspect de l'invention, la couche externe inférieure de l'élément en couches constituée de matériaux diélectriques est choisie parmi :

- les substrats transparents dont l'une des surfaces principales est texturée et l'autre lisse, de préférence choisis parmi les polymères, les verres, les céramiques,
- une couche de matériau diélectrique choisie parmi les oxydes, nitrures ou halogénures d'un ou plusieurs métaux de transition, non-métaux ou métaux alcalino-terreux,
- une couche à base de matériaux durcissables initialement dans un état visqueux, liquide ou pâteux adaptés à des opérations de mise en forme comprenant :

  - les matériaux photoréticulables et/ou photopolymérisables,
  - les couches déposées par un procédé sol-gel,
  - les intercalaires ou feuillets de matière plastique thermoformable ou sensible à la pression pouvant être de préférence à base de polymères choisis parmi les polybutyrales de vinyle (PVB), les polychlorures de vinyle (PVC), les polyuréthanes (PU), les polyéthylènes téréphtalates (PET) ou les copolymères d'éthylène-acétate de vinyle (EVA).

La texturation de l'une des surfaces principales des substrats transparents peut être obtenue par tout procédé connu de texturation, par exemple par embossage de la surface du substrat préalablement chauffée à une température à laquelle il est possible de la déformer, en particulier par laminage au moyen d'un rouleau ayant à sa surface une texturation complémentaire de la texturation à former sur le substrat ; par abrasion au moyen de particules ou de surfaces abrasives, en particulier par sablage ; par traitement chimique, notamment traitement à l'acide dans le cas d'un substrat en verre ; par moulage, notamment moulage par injection dans le cas d'un substrat en polymère thermoplastique ; par gravure.

Lorsque le substrat transparent est en polymère, il peut être rigide ou flexible. Des exemples de polymères convenant selon l'invention comprennent, notamment :

- les polyesters tels que le polyéthylène téréphtalate (PET), le polybutylène téréphtalate (PBT), le polyéthylène naphtalate (PEN) ;
- les polyacrylates tels que le polyméthacrylate de méthyle (PMMA) ;
- les polycarbonates ;
- les polyuréthanes ;
- les polyamides ;
- les polyimides ;
- les polymères fluoroesters tels que l'éthylène tétrafluoroéthylène (ETFE), le polyfluorure de vinylidène(PVDF), le polychlorotrifluoréthylène (PCTFE), l'éthylène de chlorotrifluoréthylène (ECTFE), les copolymères éthylène-propylène fluorés (FEP) ;
- les résines photoréticulées et/ou photopolymérisées, telles que les résines thiolène, polyuréthane, uréthane-acrylate, polyester-acrylate et
- les polythiouréthanes.

Ces polymères présentent en général une gamme d'indice de réfraction variant de 1,30 à 1,70. Toutefois, il est intéressant de noter que certains de ces polymères et notamment les polymères comprenant du soufre tels que les polythiouréthanes peuvent présenter des indices de réfraction élevés pouvant aller jusqu'à 1,74.

Des exemples de substrats en verre directement utilisables en tant que couche externe de l'élément en couches, comprennent :

- les substrats en verre commercialisés par la société Saint-Gobain Glass dans la gamme SATINOVO®, qui sont déjà texturés et présentent sur l'une de leurs surfaces principales une texture obtenue par sablage ou attaque acide ;
- les substrats en verre commercialisés par la société Saint-Gobain Glass dans la gamme ALBARINO® S, P ou G ou dans la gamme MASTERGLASS®, qui présentent sur l'une de leurs surfaces principales une texture obtenue par laminage,
- les substrats en verre à haut indice texturés par sablage tel que du verre flint par exemple commercialisés par la société Schott sous les références SF6 (n=1,81), 7SF57 (n=1,85), N-SF66 (n=1,92), P-SF68 (n=2,00).

Les couches de matériau diélectrique choisies parmi les oxydes, nitrures ou halogénures d'un ou plusieurs métaux de transition, non-métaux ou métaux alcalino-terreux, peuvent être déposées par magnétron et ensuite texturées par abrasion au moyen de particules ou de surfaces abrasives, en particulier par sablage ; par traitement chimique ou par gravure.

La couche externe inférieure de l'élément en couche peut également être à base de matériaux durcissables initialement dans un état visqueux, liquide ou pâteux adapté à des opérations de mise en forme.

La couche déposée initialement dans un état visqueux, liquide ou pâteux peut être une couche de matériau photoréticulable et/ou photopolymérisable. De préférence, ce matériau photoréticulable et/ou photopolymérisable se présente sous forme liquide à température ambiante et donne, lorsqu'il a été irradié et photoréticulé et/ou photopolymérisé, un solide transparent dépourvu de bulles ou de toute autre irrégularité. Il peut s'agir en particulier d'une résine telle que celles habituellement utilisées comme adhésifs, colles ou revêtements de surface. Ces résines sont généralement à base de monomères/ comonomères/ pré-polymères de type époxy, époxysilane, acrylate, méthacrylate, acide acrylique, acide méthacrylique. On peut citer par exemple les résines thiolène, polyuréthane, uréthane-acrylate, polyester-acrylate. Au lieu d'une résine, il peut s'agir d'un gel aqueux photoréticulable, tel qu'un gel de polyacrylamide. Des exemples de résines photoréticulables et/ou photopolymérisables utilisables dans la présente invention comprennent les résines durcissables aux UV de type KZ6661 commercialisées par la société JSR Corporation.

En variante, la couche externe déposée initialement dans un état visqueux, liquide ou pâteux peut être une couche déposée par un procédé sol-gel.

La texturation de la couche externe inférieure à base de matériaux durcissables initialement dans un état visqueux, liquide ou pâteux peut être réalisée à l'aide d'un rouleau ayant à sa surface une texturation complémentaire de celle à former sur de la surface principale externe de ladite couche.

La couche externe inférieure peut comprendre une couche à base d'un intercalaire ou feuille en matière plastique thermoformable ou sensible à la pression texturée par compression et/ou chauffage. Cette couche à base de matériau polymère peut être, en particulier, une couche à base de polybutyral de vinyle (PVB), d'éthylène-acétate de vinyle (EVA), de polyuréthane (PU), de polyéthylène téréphtalate (PET), de polychlorure de vinyle (PVC). L'indice des intercalaires standards de feuilletage (PVB, EVA, PU, SentryGlas®) est au maximum d'environ 1,491 à 589 nm.

L'épaisseur de la couche externe inférieure est de préférence comprise entre 1 μm et 6 mm et varie selon le choix du matériau diélectrique.

Les substrats en verre plats ou texturés ont de préférence une épaisseur comprise entre 0,4 et 6 mm, de préférence 0,7 et 2 mm.

Les substrats en polymère plats ou texturés ont de préférence une épaisseur comprise entre 0,020 et 2 mm, de préférence 0,025 et 0,25 mm.

Les couches externes constituées d'une couche de matériaux diélectrique ont de préférence une épaisseur comprise entre 0,2 et 20 μm, de préférence 0,5 et 2 μm.

Les couches à base de matériaux durcissables initialement dans un état visqueux, liquide ou pâteux adaptés à des opérations de mise en forme ont de préférence une épaisseur comprise entre 0,5 et 100 μm, de préférence entre 0,5 et 40 μm et mieux entre 0,5 et 15 μm. Les couches à base de matériaux photoréticulables et/ou photopolymérisables ont de préférence une épaisseur comprise entre 0,5 et 20 μm, de préférence 0,7 et 10 μm. Les couches déposées par un procédé sol-gel ont de préférence une épaisseur comprise entre 0,5 et 50 μm, de préférence entre 10 et 15 μm.

Les couches à base d'un intercalaire ou feuille en matière plastique ont de préférence une épaisseur comprise entre 10 μm et 1 mm, de préférence comprise entre 0,3 et 1 mm.

Les matériaux ou couche diélectrique peuvent avoir :

- un indice de réfraction compris entre 1,51 et 1,53, par exemple dans le cas de l'utilisation d'un verre standard,
- un indice de réfraction inférieur à 1,51, de préférence inférieur à 1,49, dans le cas de l'utilisation d'un matériau ou couche diélectrique à bas indice de réfraction,
- un indice de réfraction supérieur à 1,54, de préférence supérieur à 1,7, dans le cas de l'utilisation d'un matériau ou couche diélectrique à haut indice de réfraction.

La couche ou l'empilement de couches de la couche centrale de l'élément en couches peut comprendre :

- au moins une couche mince constituée en un matériau diélectrique choisi parmi les oxydes, nitrures ou halogénures d'un ou plusieurs métaux de transition, non-métaux ou métaux alcalino-terreux,
- au moins une couche mince métallique, notamment une couche mince d'argent, d'or, de cuivre, de titane, de niobium, de silicium, d'aluminium, d'alliage nickel-chrome (NiCr), d'acier inoxydable, ou de leurs alliages.

La couche mince constituée en un matériau diélectrique peut être choisie parmi :

- au moins une couche mince constituée en un matériau diélectrique à haut indice de réfraction, différent de l'indice de réfraction des couches externes, tel que $Si_3N_4$, AIN, NbN, $SnO_2$, ZnO, SnZnO, $Al_2O_3$, $MoO_3$, NbO, $TiO_2$, $ZrO_2$,
- au moins une couche mince constituée en un matériau diélectrique à bas indice de réfraction, différent de l'indice de réfraction des couches externes, tel que $SiO_2$, $MgF_2$, $AlF_3$.

Le choix de l'épaisseur de la couche centrale dépend d'un certain nombre de paramètres. De manière générale, on considère que l'épaisseur totale de la couche centrale est comprise entre 5 et 200 nm et l'épaisseur d'une couche de la couche centrale est comprise entre 1 et 200 nm.

Lorsque la couche centrale est une couche métallique, l'épaisseur d'une couche est de préférence comprise entre 5 à 40 nm, mieux comprise entre 6 et 30 nm et encore mieux de 6 à 20 nm.

Lorsque la couche centrale est une couche diélectrique, par exemple de $TiO_2$, elle présente de préférence une épaisseur comprise entre 20 et 100 nm et mieux de 55 et 65 nm et/ou un indice de réfraction compris entre 2,2 et 2,4.

De manière avantageuse, la composition de la couche centrale de l'élément en couches peut être ajustée pour conférer des propriétés supplémentaires à l'élément en couches, par exemple des propriétés thermiques, de type contrôle solaire. Ainsi, dans un mode de réalisation, la couche centrale de l'élément en couches est un empilement transparent de couches minces comprenant une alternance de « n » couches fonctionnelles métalliques, notamment de couches fonctionnelles à base d'argent ou d'alliage métallique contenant de l'argent, et de « (n + 1) » revêtements antireflet, avec n ≥ 1, où chaque couche fonctionnelle métallique est disposée entre deux revêtements antireflet.

De manière connue, un tel empilement à couche fonctionnelle métallique présente des propriétés de réflexion dans le domaine du rayonnement solaire et/ou dans le domaine du rayonnement infrarouge de grande longueur d'onde. Dans un tel empilement, les couches fonctionnelles métalliques déterminent essentiellement les performances thermiques, tandis que les revêtements antireflets qui les encadrent agissent sur l'aspect optique de manière interférentielle. En effet, si les couches fonctionnelles métalliques permettent d'obtenir des performances thermiques souhaitées même à une faible épaisseur géométrique, de l'ordre de 10 nm pour chaque couche fonctionnelle métallique, elles s'opposent toutefois fortement au passage de rayonnement dans le domaine de longueurs d'onde du visible. Dès lors, des revêtements antireflets de part et d'autre de chaque couche fonctionnelle métallique sont nécessaires pour assurer une bonne transmission lumineuse dans le domaine du visible.

L'élément en couches obtenu combine alors des propriétés optiques, à savoir des propriétés de transmission spéculaire et de réflexion diffuse d'un rayonnement incident sur l'élément en couches, et des propriétés thermiques, à savoir des propriétés de contrôle solaire. Un tel élément en couches peut être utilisé pour des vitrages de protection solaire et/ou d'isolation thermique de bâtiments ou véhicules.

Selon un aspect de l'invention, la texture de chaque surface de contact entre deux couches adjacentes de l'élément en couches qui sont l'une diélectrique et l'autre métallique, ou qui sont deux couches diélectriques d'indices de réfraction différents, est formée par une pluralité de motifs en creux ou en saillie par rapport à un plan général de la surface de contact. De préférence, la hauteur moyenne des motifs de chaque surface de contact entre deux couches adjacentes de l'élément en couches qui sont l'une diélectrique et l'autre métallique, ou qui sont deux couches diélectriques d'indices de réfraction différents, est comprise entre 1 micromètre et 100 $\mu$m. Au sens de l'invention, la hauteur moyenne des motifs de la surface de contact est définie comme la moyenne arithmétique des distances $y_i$ en valeur absolue prises entre le sommet et le plan général de la surface de contact pour chaque motif de la surface de contact, égale à

$$\frac{1}{n}\sum_{i=1}^{n}\left|y_i\right|.$$

Les motifs de la texture de chaque surface de contact entre deux couches adjacentes de l'élément en couches qui sont l'une diélectrique et l'autre métallique, ou qui sont deux couches diélectriques d'indices de réfraction différents, peuvent être répartis de manière aléatoire sur la surface de contact. En variante, les motifs de la texture de chaque surface de contact entre deux couches adjacentes de l'élément en couches qui sont l'une diélectrique et l'autre métallique, ou qui sont deux couches diélectriques d'indices de réfraction différents, peuvent être répartis de manière périodique sur la surface de contact. Ces motifs peuvent être, notamment, des cônes, des pyramides, des rainures, des nervures, des vaguelettes.

Selon un aspect de l'invention, pour chaque couche de la couche centrale qui est encadrée par des couches de nature, diélectrique ou métallique, différente de la sienne ou d'indices de réfraction différents du sien, l'épaisseur de cette couche, prise perpendiculairement à ses surfaces de contact avec les couches adjacentes, est faible par rapport à la hauteur moyenne des motifs de chacune de ses surfaces de contact avec les couches adjacentes. Une telle épaisseur faible permet d'augmenter la probabilité que l'interface d'entrée d'un rayonnement dans cette couche et l'interface de sortie du rayonnement hors de cette couche soient parallèles, et donc d'augmenter le pourcentage de transmission spéculaire du rayonnement à travers l'élément en couches. De manière avantageuse, l'épaisseur de chaque couche de la couche centrale qui est intercalée entre deux couches de nature, diélectrique ou métallique, différente de la sienne ou d'indices de réfraction différents du sien, où cette épaisseur est prise perpendiculairement à ses surfaces de contact avec les couches adjacentes, est inférieure à 1/4 de la hauteur moyenne des motifs de chacune de ses surfaces de contact avec les couches adjacentes.

De manière avantageuse, l'élément en couches comprend, sur au moins l'une de ses surfaces principales externes lisses, un revêtement antireflet à l'interface entre l'air et le matériau constitutif de la couche externe formant cette surface principale externe. Grâce à la présence de ce revêtement antireflet, un rayonnement incident sur l'élément en couches du côté de cette surface principale externe est réfléchi de manière privilégiée à chaque surface de contact texturée plutôt que sur la surface externe lisse de l'élément en couches, ce qui correspond à un mode de réflexion diffuse plutôt qu'à un mode de réflexion spéculaire. Une réflexion diffuse du rayonnement par l'élément en couches est ainsi favorisée par rapport à une réflexion spéculaire.

Le revêtement antireflet prévu sur au moins l'une des surfaces principales externes de l'élément en couches peut être de tout type permettant de réduire la réflexion de rayonnement à l'interface entre l'air et la couche externe correspondante de l'élément en couches. Il peut s'agir, notamment, d'une couche d'indice de réfraction compris entre l'indice de réfraction de l'air et l'indice de réfraction de la couche externe, telle qu'une couche déposée sur la surface de la couche externe par une technique sous vide ou une couche poreuse de type sol-gel, ou encore, dans le cas où la couche externe est en verre, une partie superficielle creusée de la couche externe en verre obtenue par un traitement à l'acide de type "etching". En variante, le revêtement antireflet peut être formé par un empilement de couches minces ayant des indices de réfraction alternativement plus faibles et plus forts jouant le rôle d'un filtre interférentiel à l'interface entre l'air et la couche externe, ou par un empilement de couches minces présentant un gradient, continu ou échelonné, d'indices de réfraction entre l'indice de réfraction de l'air et celui de la couche externe.

La couche centrale est formée soit par une couche unique déposée de manière conforme sur la surface principale texturée de la première couche externe, soit par un empilement de couches, déposées successivement de manière conforme sur la surface principale texturée de la première couche externe.

Selon l'invention, on considère que la couche centrale est déposée de manière conforme sur la surface principale texturée de la première couche externe, si suite au dépôt, la surface supérieure de la couche centrale est texturée et parallèle à la surface de contact texturée de la première couche externe. Le dépôt de la couche centrale de manière conforme, ou des couches de la couche centrale successivement de manière conforme, sur la surface principale texturée de la première couche externe est réalisé de préférence par pulvérisation cathodique, notamment assistée par un champ magnétique.

Les couches additionnelles sont de préférence choisies parmi :

- les substrats transparents choisis parmi les polymères, les verres ou les céramiques tels que définis ci-dessus mais comprenant deux surfaces principales lisses,
- les matériaux durcissables initialement dans un état visqueux, liquide ou pâteux adapté à des opérations de mise en forme tels que décrits ci-dessus,
- les intercalaires ou feuilles en matière plastique thermoformable ou sensible à la pression tels que décrits ci-dessus.

La surface principale externe de la couche sol-gel peut présenter certaines irrégularités de surface à grande échelle. Pour rétablir le caractère lisse de la couche externe de l'élément en couches, il est donc possible de venir positionner au contact de cette surface présentant certaines irrégularités, une couche additionnelle ayant sensiblement le même indice de réfraction que ladite couche externe, telle qu'une feuille en matière plastique décrite ci-dessus.

De manière avantageuse, les surfaces principales externes lisses de l'élément en couches et/ou les surfaces principales externes lisses du vitrage sont planes ou bombées, de préférence, ces surfaces principales externes lisses sont parallèles entre elles. Cela contribue à limiter la dispersion lumineuse pour un rayonnement traversant l'élément en couches, et donc à améliorer la netteté de la vision à travers l'élément en couches.

L'élément en couches peut être un vitrage rigide ou un film flexible. Un tel film flexible est avantageusement muni, sur l'une de ses surfaces principales externes, d'une couche d'adhésif recouverte d'une bande de protection destinée à être retirée pour le collage du film. L'élément en couches sous forme de film flexible est alors apte à être rapporté par collage sur une surface existante, par exemple une surface d'un vitrage, afin de conférer à cette surface des propriétés de réflexion diffuse, tout en maintenant des propriétés de transmission spéculaire.

Dans un mode de réalisation de l'invention, la couche externe inférieure est un substrat transparent. La couche centrale est formée soit par une couche unique déposée de manière conforme sur la surface principale texturée de la première couche externe, soit par un empilement de couches, déposées successivement de manière conforme sur la surface principale texturée de la première couche externe. De préférence, la couche centrale est déposée par pulvérisation cathodique, notamment assistée par un champ magnétique. La deuxième couche externe ou couche externe supérieure comprend la couche de sol-gel, déposée sur la surface principale texturée de la couche centrale opposée à la première couche externe.

Selon un autre aspect de l'invention, une couche additionnelle supérieure peut être utilisée comme contre-substrat. La couche sol-gel assure alors une solidarisation entre la couche externe inférieure munie de la couche centrale et le contre-substrat.

Selon un autre aspect de l'invention, lorsque la couche externe inférieure ou une couche additionnelle comprend une couche à base d'un intercalaire ou feuille en matière plastique thermoformable ou sensible à la pression, une couche additionnelle, par exemple, un substrat transparent d'indice de réfraction sensiblement égal à ceux des couches externes peut être utilisé. La couche à base d'un intercalaire ou feuille en matière plastique correspond alors à un intercalaire de feuilletage assurant la liaison entre la couche externe inférieure de l'élément en couche revêtu de la couche centrale et la couche additionnelle.

L'élément en couches transparent de l'invention comprend, de préférence, l'empilement suivant :

- éventuellement au moins une couche additionnelle inférieure choisie parmi les substrats transparents dont les deux surfaces principales sont lisses tels que les polymères et les verres et les intercalaires en matière plastique thermoformable ou sensible à la pression,
- une couche externe inférieure choisie parmi les substrats transparents tels que les polymères et les verres et les matériaux durcissables initialement dans un état visqueux, liquide ou pâteux adapté à des opérations de mise en forme,
- une couche centrale comprenant une couche mince constituée en un matériau diélectrique ou une couche mince métallique,
- une couche externe supérieure choisie parmi les couches sol-gel,
- éventuellement au moins une couche additionnelle supérieure choisie parmi les substrats transparents dont les deux surfaces principales sont lisses choisis parmi les polymères et les verres et les intercalaires en matière plastique thermoformable ou sensible à la pression.

Dans une variante de l'invention, l'élément en couches comprend :

- une couche externe inférieure choisie parmi les substrats transparents en verre rugueux,
- une couche centrale,
- une couche externe supérieure choisie parmi les couches sol-gel,
- une couche additionnelle supérieure choisie parmi les substrats transparents en verre plat.

Selon un autre mode de réalisation, l'élément en couches de l'invention comprend l'empilement suivant :

- une couche externe inférieure choisie parmi les substrats transparents en verre rugueux,
- une couche centrale,
- une couche externe supérieure choisie parmi les couches sol-gel,
- éventuellement une couche additionnelle supérieure choisie parmi les intercalaires de matière thermoformables ou sensibles à la pression, sur laquelle se superpose préférentiellement une autre couche additionnelle supérieure choisie parmi les substrats transparents en verre.

Un autre objet de l'invention est un procédé de fabrication d'un élément en couches tel que décrit précédemment, comprenant les étapes suivantes :

- on fournit, en tant que première couche externe ou couche externe inférieure, un substrat transparent dont l'une des surfaces principales est texturée et l'autre surface principale est lisse ;
- on dépose une couche centrale sur la surface principale texturée de la couche externe inférieure, soit, lorsque la couche centrale est formée par une couche unique, qui est une couche diélectrique d'indice de réfraction différent de celui de la couche externe inférieure ou une couche métallique, en déposant la couche centrale de manière conforme sur ladite surface principale texturée, soit, lorsque la couche centrale est formée par un empilement de couches comprenant au moins une couche diélectrique d'indice de réfraction différent de celui de la couche externe inférieure ou une couche métallique, en déposant les couches de la couche centrale successivement de manière conforme sur ladite surface principale texturée ;
- on forme la couche externe supérieure sol-gel sur la surface principale texturée de la couche centrale opposée à la couche externe inférieure, où les couches externes inférieure et supérieure sont constituées en des matériaux diélectriques ayant sensiblement le même indice de réfraction, par dépôt par procédé sol-gel,
- éventuellement on forme au moins une couche additionnelle supérieure et/ou inférieure sur la ou les surfaces principales externes lisses de l'élément en couches.

L'invention a également pour objet une façade de bâtiment, notamment une façade de terminal d'aéroport, comprenant au moins un élément en couches tel que décrit précédemment.

Un autre objet de l'invention est un écran d'affichage ou de projection comprenant un élément en couches tel que décrit précédemment. En particulier, un objet de l'invention est un vitrage de système Head Up Display comprenant un élément en couches tel que décrit précédemment.

Enfin, l'invention a pour objet l'utilisation d'un élément en couches tel que décrit précédemment comme tout ou partie d'un vitrage pour véhicule, bâtiment, mobilier urbain, ameublement intérieur, écran d'affichage ou de projection, système Head Up Display. L'élément en couches selon l'invention peut, par exemple, être intégré dans une vitrine permettant ainsi la projection d'image sur ledit élément en couches.

Les caractéristiques et avantages de l'invention apparaîtront dans la description qui va suivre de plusieurs modes de réalisation d'un élément en couches, donnée uniquement à titre d'exemple et faite en se référant aux dessins annexés dans lesquels :

- la figure 1 est une coupe transversale schématique d'un élément en couches selon l'invention ;
- la figure 2 est une vue à plus grande échelle du détail I de la figure 1 pour une première variante de l'élément en couches ;
- la figure 3 est une vue à plus grande échelle du détail I de la figure 1 pour une deuxième variante de l'élément en couches ; et
- les figures 4 et 5 représentent des schémas montrant les étapes d'un procédé de fabrication de l'élément en couches selon l'invention,
- la figure 6 représente l'évolution de l'indice de réfraction en fonction des proportions en volume de $TiO_2$ dans une couche sol-gel,
- la figure 7 représente des clichés pris au microscope électronique à balayage de substrats satinés de verre rugueux transparent Satinovo® sur lequel une couche sol-gel a été déposée par procédé sol gel,
- les figures 8 et 9 sont des graphiques montrant l'évolution du flou (axe des ordonnées situé à droite) et de la clarté (axe des ordonnées situé à gauche) en fonction de l'indice de réfraction de la couche sol-gel et de la variation d'indice de réfraction entre un substrat Satinovo® utilisé comme couche externe inférieure et la couche sol-gel.

Pour la clarté du dessin, les épaisseurs relatives des différentes couches sur les figures n'ont pas été rigoureusement respectées. De plus, la possible variation d'épaisseur de la ou chaque couche constitutive de la couche centrale en fonction de la pente de la texture n'a pas été représentée sur les figures, étant entendu que cette possible variation d'épaisseur n'impacte pas le parallélisme des surfaces de contact texturées. En effet, pour chaque pente donnée de la texture, les surfaces de contact texturées sont parallèles entre elles.

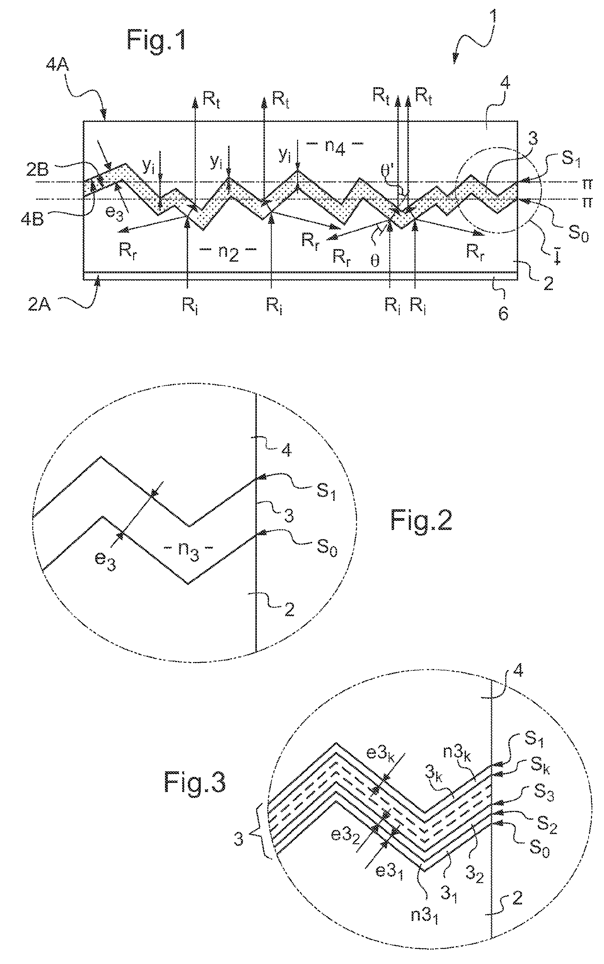

L'élément en couches 1 illustré sur la figure 1 comprend deux couches externes 2 et 4, qui sont constituées en des matériaux diélectriques transparents ayant sensiblement le même indice de réfraction n2, n4. Chaque couche externe 2 ou 4 présente une surface principale lisse, respectivement 2A ou 4A, dirigée vers l'extérieur de l'élément en couches, et une surface principale texturée, respectivement 2B ou 4B, dirigée vers l'intérieur de l'élément en couches.

Les surfaces externes lisses 2A et 4A de l'élément en couches 1 permettent une transmission spéculaire de rayonnement à chaque surface 2A et 4A, c'est-à-dire l'entrée d'un rayonnement dans une couche externe ou la sortie d'un rayonnement depuis une couche externe sans modification de la direction du rayonnement.

Les textures des surfaces internes 2B et 4B sont complémentaires l'une de l'autre. Comme bien visible sur la figure 1, les surfaces texturées 2B et 4B sont positionnées en regard l'une de l'autre, dans une configuration où leurs textures sont strictement parallèles entre elles. L'élément en couches 1 comprend également une couche centrale 3, intercalée en contact entre les surfaces texturées 2B et 4B.

Dans la variante montrée sur la figure 2, la couche centrale 3 est monocouche et constituée en un matériau transparent qui est soit métallique, soit diélectrique d'indice de réfraction n3 différent de celui des couches externes 2 et 4.

Dans la variante montrée sur la figure 3, la couche centrale 3 est formée par un empilement transparent de plusieurs couches $3_1, 3_2, ..., 3_k$, où au moins l'une des couches $3_1$ à $3_k$ est soit une couche métallique, soit une couche diélectrique d'indice de réfraction différent de celui des couches externes 2 et 4. De préférence, au moins chacune des deux couches $3_1$ et $3_k$ situées aux extrémités de l'empilement est une couche métallique ou une couche diélectrique d'indice de réfraction $n3_1$ ou $n3_k$ différents de celui des couches externes 2 et 4.

Sur les figures 2 et 3, on note $S_0$ la surface de contact entre la couche externe 2 et la couche centrale 3, et $S_1$ la surface de contact entre la couche centrale 3 et la couche externe 4. De plus, sur la figure 3, on note successivement $S_2$ à $S_k$ les surfaces de contact internes de la couche centrale 3, en partant de la surface de contact la plus proche de la surface $S_0$.

Dans la variante de la figure 2, du fait de l'agencement de la couche centrale 3 en contact entre les surfaces texturées 2B et 4B qui sont parallèles entre elles, la surface de contact $S_0$ entre la couche externe 2 et la couche centrale 3 est texturée et parallèle à la surface de contact $S_1$ entre la couche centrale 3 et la couche externe 4. En d'autres termes, la couche centrale 3 est une couche texturée présentant sur toute son étendue une épaisseur e3 uniforme, prise perpendiculairement aux surfaces de contact So et $S_1$.

Dans la variante de la figure 3, chaque surface de contact $S_2, ..., S_k$ entre deux couches adjacentes de l'empilement constitutif de la couche centrale 3 est texturée et strictement parallèle aux surfaces de contact $S_0$ et $S_1$ entre les couches externes 2, 4 et la couche centrale 3. Ainsi, toutes les surfaces de contact So, $S_1, ..., S_k$ entre des couches adjacentes de l'élément 1 qui sont soit de natures différentes, diélectrique ou métallique, soit diélectriques d'indices de réfraction différents, sont texturées et parallèles entre elles. En particulier, chaque couche $3_1, 3_2, ..., 3_k$ de l'empilement constitutif de la couche centrale 3 présente une épaisseur $e3_1, e3_2, ..., e3_k$ uniforme, prise perpendiculairement aux surfaces de contact $S_0, S_1, ... S_k$.

Comme montré sur la figure 1, la texture de chaque surface de contact $S_0, S_1$ ou $S_0, S_1, ..., S_k$ de l'élément en couches 1 est formée par une pluralité de motifs en creux ou en saillie par rapport à un plan général $\pi$ de la surface de contact. De préférence, la hauteur moyenne des motifs de chaque surface de contact texturée $S_0, S_1$ ou $S_0, S_1, ..., S_k$ est comprise entre 1 micromètre et 100 $\mu$m. La hauteur moyenne des motifs de chaque surface de contact texturée est définie comme la moyenne arithmétique $\dfrac{1}{n}\sum_{i=1}^{n}\left|y_i\right|$, avec $y_i$ la distance prise entre le sommet et le plan $\pi$ pour chaque motif de la surface, comme montré schématiquement sur la figure 1.

Selon un aspect de l'invention, l'épaisseur e3 ou $e3_1, e3_2, ..., e3_k$ de la ou chaque couche constitutive de la couche centrale 3 est inférieure à la hauteur moyenne des motifs de chaque surface de contact texturée $S_0, S_1$ ou $S_0, S_1, ..., S_k$ de l'élément en couches 1. Cette condition est importante pour augmenter la probabilité que l'interface d'entrée d'un rayonnement dans une couche de la couche centrale 3 et l'interface de sortie du rayonnement hors de cette couche soient parallèles, et ainsi augmenter le pourcentage de transmission spéculaire du rayonnement à travers l'élément en couches 1. Dans un souci de visibilité des différentes couches, cette condition n'a pas été strictement respectée sur les figures.

De préférence, l'épaisseur e3 ou $e3_1, e3_2, ..., e3_k$ de la ou chaque couche constitutive de la couche centrale 3 est inférieure à 1/4 de la hauteur moyenne des motifs de chaque surface de contact texturée de l'élément en couches. En pratique, lorsque la couche centrale 3 est une couche mince ou un empilement de couches minces, l'épaisseur $e3$ ou $e3_1$, $e3_2$,..., $e3_k$ de chaque couche de la couche centrale 3 est de l'ordre de, ou inférieure à, 1/10 de la hauteur moyenne des motifs de chaque surface de contact texturée de l'élément en couches.

La figure 1 illustre le parcours d'un rayonnement, qui est incident sur l'élément en couches 1 du côté de la couche externe 2. Les rayons incidents $R_i$ arrivent sur la couche externe 2 avec un angle d'incidence $\theta$ donné. Comme montré sur la figure 1, les rayons incidents $R_i$, lorsqu'ils atteignent la surface de contact $S_0$ entre la couche externe 2 et la couche centrale 3, sont réfléchis soit par la surface métallique, soit du fait de la différence d'indice de réfraction à cette surface de contact respectivement entre la couche externe 2 et la couche centrale 3 dans la variante de la figure 2 et entre la couche externe 2 et la couche $3_1$ dans la variante de la figure 3. Comme la surface de contact $S_0$ est texturée, la réflexion s'opère dans une pluralité de directions $R_r$. La réflexion du rayonnement par l'élément en couches 1 est donc diffuse.

Une partie du rayonnement incident est également réfractée dans la couche centrale 3. Dans la variante de la figure 2, les surfaces de contact $S_0$ et $S_1$ sont parallèles entre elles, ce qui implique d'après la loi de Snell-Descartes que $n2.\sin(\theta) = n4.\sin(\theta')$, où $\theta$ est l'angle d'incidence du rayonnement sur la couche centrale 3 à partir de la couche externe 2 et $\theta'$ est l'angle de réfraction du rayonnement dans la couche externe 4 à partir de la couche centrale 3. Dans la variante de la figure 3, comme les surfaces de contact $S_0$, $S_1$,..., $S_k$ sont toutes parallèles entre elles, la relation $n2.\sin(\theta) = n4.\sin(\theta')$ issue de la loi de Snell-Descartes reste vérifiée. Dès lors, dans les deux variantes, comme les indices de réfraction n2 et n4 des deux couches externes sont sensiblement égaux l'un à l'autre, les rayons $R_t$ transmis par l'élément en couches sont transmis avec un angle de transmission $\theta'$ égal à leur angle d'incidence $\theta$ sur l'élément en couches. La transmission du rayonnement par l'élément en couches 1 est donc spéculaire.

De manière analogue, dans les deux variantes, un rayonnement incident sur l'élément couches 1 du côté de la couche externe 4 est réfléchi de manière diffuse et transmis de manière spéculaire par l'élément en couches, pour les mêmes raisons que précédemment.

De manière avantageuse, l'élément en couches 1 comprend un revêtement antireflet 6 sur au moins l'une de ses surfaces externes lisses 2A et 4A. De préférence, un revêtement antireflet 6 est prévu sur chaque surface principale externe de l'élément en couches qui est destinée à recevoir un rayonnement. Dans l'exemple de la figure 1, seule la surface 2A de la couche externe 2 est munie d'un revêtement antireflet 6, car il s'agit de la surface de l'élément en couches qui est dirigée du côté d'incidence du rayonnement.

Comme évoqué précédemment, le revêtement antireflet 6, prévu sur la surface lisse 2A et/ou 4A de la couche externe 2 ou 4, peut-être de tout type permettant de réduire la réflexion de rayonnement à l'interface entre l'air et la couche externe. Il peut s'agir notamment d'une couche d'indice de réfraction compris entre l'indice de réfraction de l'air et l'indice de réfraction de la couche externe, d'un empilement de couches minces jouant le rôle d'un filtre interférentiel, ou encore d'un empilement de couches minces présentant un gradient d'indices de réfraction.

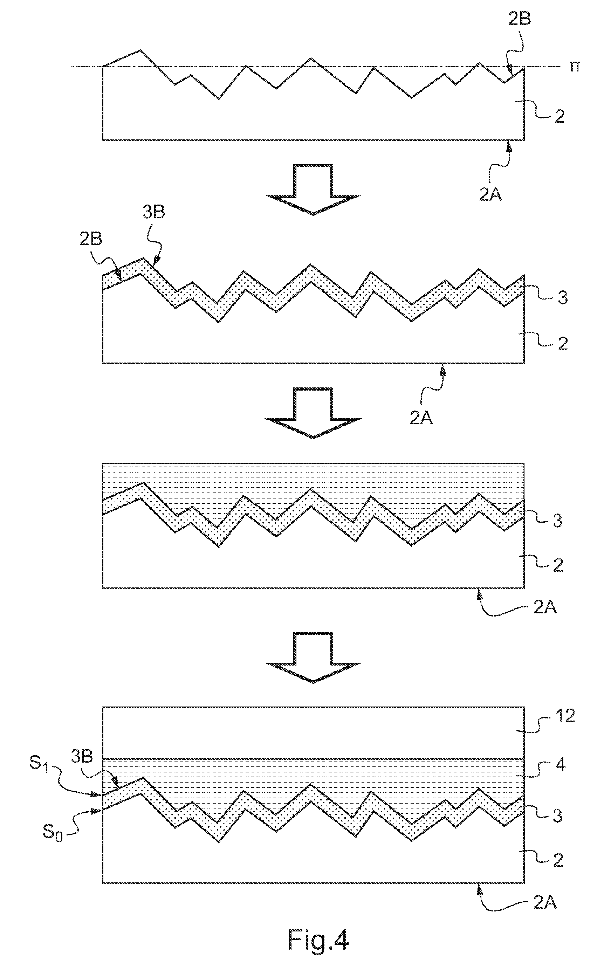

Un exemple de procédé de fabrication du vitrage de l'invention est décrit ci-après en référence à la figure 4. Selon ce procédé, la couche centrale 3 est déposée de manière conforme sur une surface texturée 2B d'un substrat transparent, rigide ou flexible, formant la couche externe 2 de l'élément en couches 1. La surface principale 2A de ce substrat opposée à la surface texturée 2B est lisse. Ce substrat 2 peut être, notamment, un substrat en verre texturé de type SATINOVO®, ALBARINO® ou MASTERGLASS®. En variante, le substrat 2 peut être un substrat à base de matériau polymère, rigide ou flexible, par exemple de type polyméthacrylate de méthyle ou polycarbonate.

Le dépôt conforme de la couche centrale 3, qu'elle soit monocouche ou formée par un empilement de plusieurs couches, est notamment réalisé, de préférence, sous vide, par pulvérisation cathodique assistée par champ magnétique (pulvérisation dite "cathodique magnétron"). Cette technique permet de déposer, sur la surface texturée 2B du substrat 2, soit la couche unique de manière conforme, soit les différentes couches de l'empilement successivement de manière conforme. Il peut s'agir en particulier de couches minces diélectriques, notamment des couches de $Si_3N_4$, $SnO_2$, ZnO, $ZrO_2$, $SnZnO_x$, AlN, NbO, NbN, $TiO_2$, $SiO_2$, $Al_2O_3$, $MgF_2$, $AlF_3$, ou de couches minces métalliques, notamment des couches d'argent, d'or, de titane, de niobium, de silicium, d'aluminium, d'alliage nickel-chrome (NiCr), ou d'alliages de ces métaux.

Dans le procédé de la figure 4, la deuxième couche externe 4 de l'élément en couches 1 peut être formée en recouvrant la couche centrale 3 avec une couche sol-gel transparente d'indice de réfraction sensiblement égal à celui du substrat 2. Cette couche vient, à l'état visqueux, liquide ou pâteux, épouser la texture de la surface 3B de la couche centrale 3 opposée au substrat 2. Ainsi, on garantit que, à l'état durci de la couche 4, la surface de contact $S_1$ entre la couche centrale 3 et la couche externe 4 est bien texturée et parallèle à la surface de contact $S_0$ entre la couche centrale 3 et la couche externe 2.

La couche externe 4 de l'élément en couches 1 de la figure 4 est une couche sol-gel, déposée par un procédé sol-gel sur la surface texturée de la couche centrale 3.

Enfin, une ou plusieurs couches additionnelles 12 peuvent être formées au-dessus de l'élément en couches. Dans ce cas, la ou les couches additionnelles sont de préférence un substrat en verre plat, un intercalaire en matière plastique ou une superposition d'un intercalaire et d'un substrat de verre plat.

Selon un mode de réalisation de l'invention, il peut être intéressant de former sur la couche sol-gel formant la couche externe de l'élément en couches, une couche additionnelle 12 en positionnant un intercalaire de feuilletage en PVB ou EVA, contre la surface externe principale lisse de l'élément en couches. La couche additionnelle 12 a dans ce cas préférentiellement sensiblement le même indice de réfraction que la couche externe de l'élément en couches obtenue à partir d'un procédé sol-gel.

La couche additionnelle peut également être un substrat transparent par exemple un verre plat. Dans ce cas, la couche additionnelle est utilisée comme un contre-substrat. La couche sol-gel assure alors une solidarisation entre la couche externe inférieure munie de la couche centrale et le contre-substrat.

L'utilisation d'un substrat transparent comme couche additionnelle supérieure est particulièrement utile lorsque la couche additionnelle directement en-dessous de ladite couche additionnelle supérieure est formée par un intercalaire de feuilletage polymère.

Une première couche additionnelle 12 formée par un intercalaire de feuilletage en PVB ou EVA peut être positionnée contre la surface supérieure externe de l'élément en couche et une seconde couche additionnelle 12 constituée d'un substrat en verre plat peuvent venir surmonter l'intercalaire.

Dans cette configuration, les couches additionnelles sont associées à l'élément en couches, par un procédé classique de feuilletage. Dans ce procédé, on positionne successivement, à partir de la surface principale externe supérieure de l'élément en couches, l'intercalaire de feuilletage polymère et le substrat, puis on applique à la structure feuilletée ainsi formée une compression et/ou un chauffage, au moins à la température de transition vitreuse de l'intercalaire de feuilletage polymère, par exemple dans une presse ou une étuve.

Au cours de ce procédé de feuilletage, lorsque l'intercalaire forme la couche supérieure additionnelle située directement au-dessus de l'élément en couche dont la couche supérieure est une couche sol-gel, il se conforme à la fois à la surface supérieure de la couche sol-gel et à la surface inférieure du substrat en verre plat.

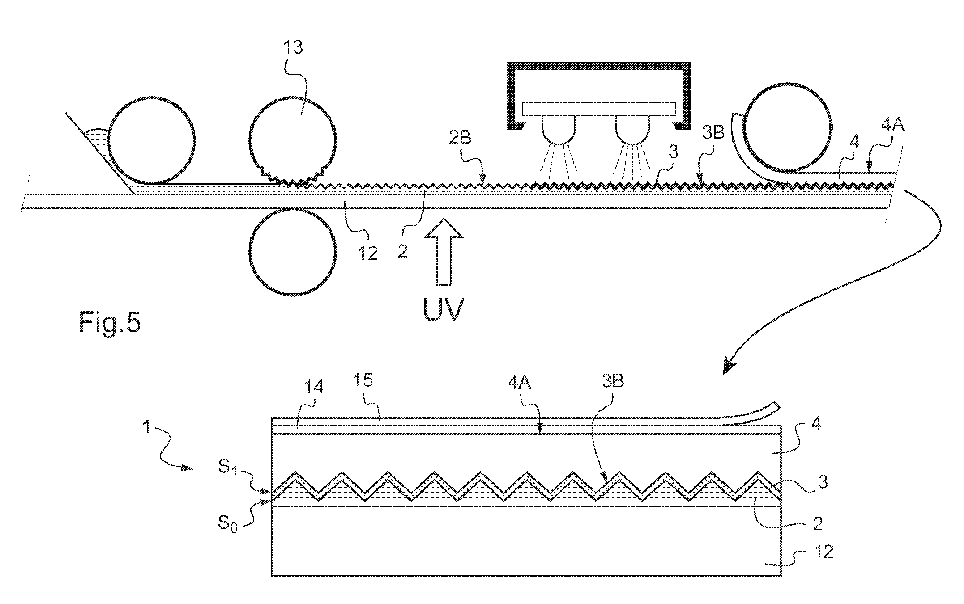

Dans le procédé illustré sur la figure 5, l'élément en couches 1 est un film flexible d'épaisseur totale de l'ordre de 200-300 $\mu$m. L'élément en couches est formé par la superposition :

- d'une couche additionnelle inférieure 12 formée par un film flexible polymérique,
- d'une couche externe 2 en matériau photoréticulable et/ou photopolymérisable sous l'action d'un rayonnement UV, appliquée contre l'une des surfaces principales lisses du film flexible,
- d'une couche centrale 3,
- d'une couche sol-gel ayant une épaisseur de 50 nm à 50 $\mu$m de manière à former la deuxième couche externe 4 de l'élément en couches 1.

Le film flexible formant la couche additionnelle inférieure peut être un film de polyéthylène téréphtalate (PET) ayant une épaisseur de 100 $\mu$m, et la couche externe 2 peut être une couche de résine durcissable aux UV de type KZ6661 commercialisée par la société JSR Corporation ayant une épaisseur d'environ 10 $\mu$m. Le film flexible et la couche 2 ont tous les deux sensiblement le même indice de réfraction, de l'ordre de 1,65 à 589 nm. A l'état durci, la couche de résine présente une bonne adhésion avec le PET.

La couche de résine 2 est appliquée sur le film flexible avec une viscosité permettant la mise en place d'une texturation sur sa surface 2B opposée au film 12. Comme illustré sur la figure 5, la texturation de la surface 2B peut être réalisée à l'aide d'un rouleau 13 ayant à sa surface une texturation complémentaire de celle à former sur la couche 2. Une fois la texturation formée, le film flexible et la couche de résine 2 superposés sont irradiés avec un rayonnement UV, comme montré par la flèche de la figure 5, ce qui permet la solidification de la couche de résine 2 avec sa texturation et l'assemblage entre le film flexible et la couche de résine 2.

La couche centrale 3 d'indice de réfraction différent de celui de la couche externe 2 est ensuite déposée de manière conforme sur la surface texturée 2B, par pulvérisation cathodique magnétron. Cette couche centrale peut être monocouche ou formée par un empilement de couches, comme décrit précédemment. Il peut s'agir par exemple :

- d'une couche de $TiO_2$ ayant une épaisseur comprise entre 55 et 65 nm, soit de l'ordre de 60 nm et un indice de réfraction de 2,45 à 550 nm,
- d'un empilement de couches comprenant au moins une couche à base d'argent tel que décrit dans les demandes de brevet WO 02/48065 et EP 0 847 965.

La couche sol-gel est ensuite déposée sur la couche centrale 3 de manière à former la deuxième couche externe 4 de l'élément en couches 1. Cette deuxième couche externe 4 se conforme à la surface texturée 3B de la couche centrale 3 opposée à la couche externe 2.

Une couche d'adhésif 14, recouverte d'une bande de protection (liner) 15 destinée à être retirée pour le collage, peut être rapportée sur la surface externe 4A de la couche 4 de l'élément en couches 1. L'élément en couches 1 se présente ainsi sous la forme d'un film flexible prêt à être rapporté par collage sur une surface, telle qu'une surface d'un vitrage, afin de conférer à cette surface des propriétés de réflexion diffuse. Dans l'exemple de la figure 5, la couche d'adhésif 14 et la bande de protection 15 sont rapportées sur la surface externe 4A de la couche 4. La surface externe 2A de la couche 2, qui est destinée à recevoir un rayonnement incident, est quant à elle munie d'un revêtement antireflet.

De manière particulièrement avantageuse, comme suggéré sur la figure 5, les différentes étapes du procédé peuvent être effectuées en continu sur une même ligne de fabrication.

La mise en place du ou des revêtements antireflet de l'élément en couches 1 n'a pas été représentée sur les figures 4 à 5. Il est à noter que, dans chacun des procédés illustrés sur ces figures, le ou les revêtements antireflet peuvent être mis en place sur les surfaces lisses 2A et/ou 4A des couches externes avant ou après l'assemblage de l'élément en couches, de manière indifférente.

L'invention n'est pas limitée aux exemples décrits et représentés. En particulier, lorsque l'élément en couches est un film flexible comme dans l'exemple de la figure 5, l'épaisseur de chaque couche externe formée à base d'un film polymère, par exemple à base d'un film de PET, peut être supérieure à 10 $\mu$m, notamment de l'ordre de 10 $\mu$m à 1 mm.

De plus, la texturation de la première couche externe 2 dans l'exemple de la figure 5 peut être obtenue sans recourir à une couche de résine durcissable déposée sur le film polymère, mais directement par embossage à chaud d'un film polymère, notamment par laminage à l'aide d'un rouleau texturé ou par pressage à l'aide d'un poinçon.

Des architectures analogues peuvent également être envisagées pour des substrats plastiques à la place des substrats en verre.

Le vitrage selon l'invention est, susceptible d'être utilisé pour toutes applications connues de vitrages, telles que pour véhicules, bâtiments, mobilier urbain, ameublement intérieur, éclairage, écrans d'affichage, etc. Il peut s'agir également d'un film flexible à base de matériau polymère, notamment apte à être rapporté sur une surface afin de lui conférer des propriétés de réflexion diffuse tout en préservant ses propriétés de transmission.

L'élément en couches à forte réflexion diffuse de l'invention peut être utilisé dans un système de visualisation dit tête haute, ou "Head Up Display" (HUD). De manière connue, les systèmes HUD, qui sont utiles notamment dans les cockpits d'avion, les trains, mais aussi aujourd'hui dans les véhicules automobiles des particuliers (voitures, camions, etc.), permettent d'afficher des informations projetées sur un vitrage, en général le pare-brise du véhicule, qui se réfléchissent vers le conducteur ou l'observateur. Ces systèmes permettent d'informer le conducteur du véhicule sans que celui-ci éloigne son regard du champ de vision en avant du véhicule, ce qui permet d'accroître grandement la sécurité. Le conducteur perçoit une image virtuelle qui se situe à une certaine distance derrière le vitrage.

Selon un aspect de l'invention, l'élément en couches est intégré dans un système HUD en tant que vitrage, sur lequel sont projetées les informations. Selon un autre aspect de l'invention, l'élément en couches est un film flexible rapporté sur une surface principale d'un vitrage d'un système HUD, notamment un pare-brise, les informations étant projetées sur le vitrage du côté du film flexible. Dans ces deux cas, il s'opère une forte réflexion diffuse sur la première surface de contact texturée rencontrée par le rayonnement dans l'élément en couches, ce qui permet une bonne visualisation de l'image virtuelle, tandis que la transmission spéculaire à travers le vitrage est préservée, ce qui garantit une vision nette à travers le vitrage.

On note que, dans les systèmes HUD de l'état de la technique, l'image virtuelle est obtenue en projetant les informations sur un vitrage (notamment un pare-brise) ayant une structure feuilletée formée de deux feuilles de verre et d'un intercalaire en matière plastique. Un inconvénient de ces systèmes existants est que le conducteur observe alors une image double, une première image réfléchie par la surface du vitrage orientée vers l'intérieur de l'habitacle et une seconde image par réflexion de la surface extérieure du vitrage, ces deux images étant légèrement décalées l'une par rapport à l'autre. Ce décalage peut perturber la vision de l'information.

L'invention permet de remédier à ce problème. En effet, lorsque l'élément en couches est intégré dans un système HUD, en tant que vitrage ou en tant que film flexible rapporté sur la surface principale du vitrage qui reçoit le rayonnement de la source de projection, la réflexion diffuse sur la première surface de contact texturée rencontrée par le rayonnement dans l'élément en couches peut être nettement plus élevée que la réflexion sur les surfaces externes en contact avec l'air. Ainsi, on limite la double réflexion en favorisant la réflexion sur la première surface de contact texturée de l'élément en couches.

## Exemples

### 1. Préparation de solutions sol-gel et de couches sol-gel comprenant un indice de réfraction ajustable

Les couches sol-gel préparées dans les exemples comprennent une matrice hybride organique/inorganique de silice et d'oxyde de zirconium dans laquelle sont dispersées des particules de dioxyde de titane. Les composés principaux utilisés dans les solutions sol-gel sont :

- le 3-glycidoxypropyltriméthoxysilane (GLYMO),

- le propoxyde de zirconium sous forme de solution à 70% en masse dans du propanol,
- le TiO$_2$, commercialisé sous le nom Cristal Activ$^{tm}$, sous forme de particules de diamètre inférieur à 50 nm dans une dispersion aqueuse présentant un contenu solide de 23% en masse.

Une première composition précurseur de la matrice est préparée en mélangeant l'organosilane, la solution de propoxyde de zirconium, de l'acide acétique et éventuellement de l'eau. Les constituants sont mélangés goutte à goutte sous agitation forte. Les autres composés sont ensuite ajoutés dans cette première composition, c'est-à-dire la dispersion aqueuse de dioxyde de titane sous forme de particules, le surfactant et éventuellement d'autres solvants de dilution tels que l'éthanol. On obtient ainsi la solution sol-gel.

En fonction des proportions de dispersion de dioxyde de titane ajoutées à la solution sol-gel, la matrice de la couche sol-gel une fois réticulée sera plus ou moins chargée en particule de TiO$_2$. L'indice de réfraction de la couche sol-gel dépend de la fraction volumique de dioxyde de titane. Il est ainsi possible de faire varier l'indice de réfraction de la couche sol-gel résultante entre 1,490 et 1,670 avec un ajustement de haute précision de l'ordre de 0,001. Il est donc possible d'obtenir pour tous types de substrats en verre standards utilisés comme couche externe inférieure, un accord d'indice inférieur à 0,015.

Le contenu solide de la couche sol-gel influence l'épaisseur maximum qu'il est possible de déposer en une passe.

Afin d'illustrer ces résultats, différentes solutions sol-gel ont été préparées. Ces solutions ont ensuite été appliquées par pulvérisation sur un support et réticulées pendant une durée de 20 minutes à quelques heures à une température de 150°C ou de 200°C de façon à former des couches sol-gel présentant des indices de réfraction variant entre 1,493 à 1,670.

## II. Influence des proportions volumiques de TiO$_2$ sur l'indice de réfraction de la couche sol-gel

Les tableaux ci-dessous récapitulent les compositions des solutions sol-gel testées ainsi que les compositions des couches sol-gel résultantes.

Concernant la solution sol-gel, les proportions données correspondent aux proportions en masse par rapport à la masse totale de la solution sol-gel.

| Solution sol-gel | A | B | C | D | E | F | G | H | I |
|---|---|---|---|---|---|---|---|---|---|
| **Composés principaux :** | | | | | | | | | |
| GLYMO | 68,1 | 64,2 | 55,6 | 52,5 | 22,5 | 20,3 | 18,3 | 16,6 | 14,8 |
| Propoxyde de zirconium | 4,8 | 4,5 | 3,9 | 3,7 | 1,6 | 1,4 | 1,3 | 1,2 | 1,0 |
| TiO$_2$ | 0,0 | 2,8 | 4,2 | 6,5 | 3,5 | 5,1 | 6,6 | 7,8 | 9,1 |
| **Additifs** | | | | | | | | | |
| Acide acétique | 4,3 | 4,0 | 3,5 | 3,3 | 1,4 | 1,3 | 1,1 | 1,0 | 0,9 |
| 3M-FC 4430 | 0,0 | 0,1 | 0,2 | 0,3 | 0,2 | 0,2 | 0,3 | 0,3 | 0,4 |
| **Solvants** | | | | | | | | | |
| Propanol | 2,0 | 1,9 | 1,7 | 1,6 | 0,7 | 0,6 | 0,5 | 0,5 | 0,4 |
| Eau | 12,8 | 21,6 | 24,4 | 31,6 | 16,0 | 20,9 | 25,5 | 29,2 | 33,3 |
| Ethanol | 0,0 | 12,4 | 18,2 | 28,2 | 15,3 | 22,2 | 28,6 | 33,9 | 39,6 |
| **Total** | 100 | 100 | 100 | 100 | 100 | 100 | 100 | 100 | 100 |

Concernant la couche sol-gel, les proportions en volume de TiO$_2$ sont définies par rapport au volume total des composants principaux comprenant la matrice hybride de silice et d'oxyde de zirconium et les particules de TiO$_2$. Les proportions des composants principaux correspondent aux proportions en masse des composés principaux de la couche sol-gel par rapport à la masse totale de composés principaux.

| Couche sol-gel | A | B | C | D | E | F | G | H | I |
|---|---|---|---|---|---|---|---|---|---|
| **Composés principaux* :** | | | | | | | | | |
| Gly-SiO2 | 96 | 91 | 87 | 82 | 79 | 72 | 65 | 59 | 53 |
| ZrO2 | 4 | 3 | 3 | 3 | 3 | 3 | 2 | 2 | 2 |
| TiO2 | 0 | 6 | 9 | 14 | 18 | 26 | 33 | 39 | 46 |

(suite)

| Couche sol-gel | A | B | C | D | E | F | G | H | I |
|---|---|---|---|---|---|---|---|---|---|
| % en volume de TiO2** | 0 | 3 | 5 | 8 | 9,8 | 15 | 20,1 | 24,7 | 30 |
| Indice mesuré | 1,493 | 1,517 | 1,529 | 1,557 | 1,567 | 1,600 | 1,623 | 1,651 | 1,674 |
| Indice Théorique | 1,493 | 1,515 | 1,528 | 1,549 | 1,564 | 1,599 | - | - | - |

Suite à la réticulation de l'organosilane et du propoxyde de zirconium par réaction d'hydrolyse et de condensation, on obtient dans la couche sol-gel une matrice à base d'oxyde de silicium comprenant un groupement organique non hydrolysable appelé ci-après « Gly-$SiO_2$ » et d'oxyde de zirconium dans laquelle sont dispersées les particules de $TiO_2$. Ces trois composés représentent les composés principaux de la couche sol-gel.

La fraction volumique de dioxyde de titane influence linéairement l'indice de réfraction de la couche sol-gel pour des proportions volumique en $TiO_2$ inférieure à 20%. Pour des proportions supérieures, l'indice de réfraction continue à augmenter mais on observe un fléchissement de la pente de la courbe. Toutefois, une fois cette courbe déterminée, l'homme du métier est en mesure d'estimer, par approximation, l'indice de réfraction d'une couche sol-gel comprenant une fraction volumique de $TiO_2$ supérieure à 20%.

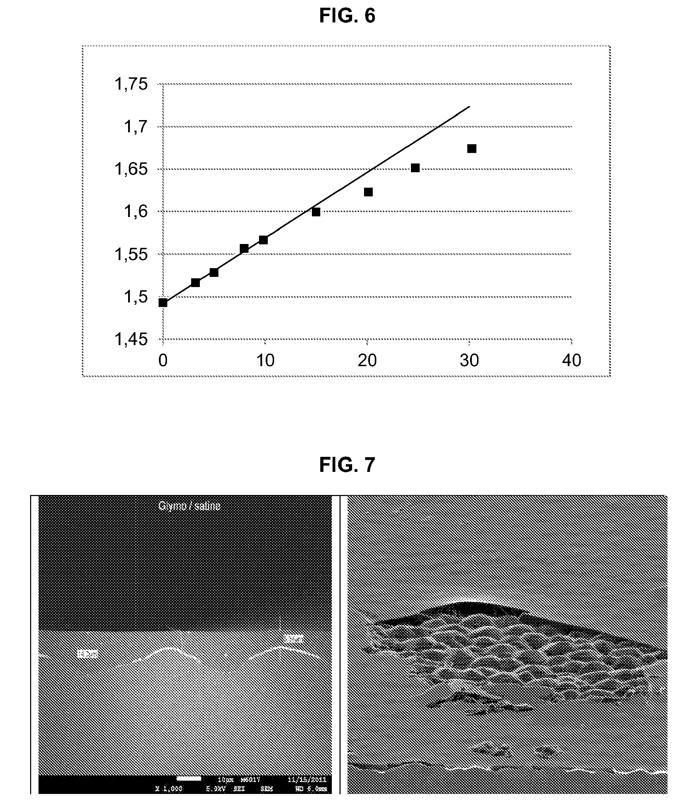

La figure 6 représente l'évolution de l'indice de réfraction en fonction des proportions en volume de $TiO_2$ dans la couche sol-gel. On observe l'évolution linéaire de l'indice de réfraction en fonction des proportions de $TiO_2$ est linéaire pour des proportions inférieures à 20%.

La précision sur l'indice de réfraction est de $7 \times 10^{-4}$ pour une erreur de 0,1% en volume sur la quantité de $TiO_2$.

**III. Observation MEB**

Des observations par microscopie électronique à balayage ont été effectuées pour s'assurer que les couches sol-gel permettent de combler en épaisseur la rugosité du substrat et d'obtenir une surface supérieure plane. Les images de la figure 7 représentent des substrats satinés de verre rugueux transparent Satinovo® de la société Saint-Gobain sur lequel une couche sol-gel a été déposée par procédé sol gel. Ces substrats de 4 mm d'épaisseur comprennent une surface principale texturée obtenue par attaque acide. Ces substrats sont donc utilisés comme couche externe inférieure de l'élément en couches. La hauteur moyenne des motifs de la texturation de cette couche externe inférieure, qui correspond à la rugosité Ra de la surface texturée du verre Satinovo®, est comprise entre 1 et 5 $\mu$m. Son indice de réfraction est de 1,518 et son PV est compris entre 12 et 17 $\mu$m.

Sur l'image de gauche représentant une vue en coupe du substrat Satinovo® recouvert de la couche sol-gel, on voit clairement que la texture est formée par une pluralité de motifs en creux ou en saillie par rapport au plan général de la surface de contact. L'épaisseur de la couche sol-gel est de 14,3 $\mu$m.

L'image de droite représente une vue prise de dessus d'un même substrat. De manière volontaire, la couche sol-gel n'a pas été appliquée sur toute la surface du substrat Satinovo®. La couche sol-gel permet de planariser la rugosité du substrat.

**IV. Evaluation de l'influence de l'accord d'indice**

Afin de mesurer l'effet de la variation d'indice de la couche sol-gel, différentes solutions sol-gel ont été préparées et déposées sur des substrats satinés de verre rugueux transparent Satinovo® définis ci-dessus. Les épaisseurs des couches sol-gel déposées après séchage sont d'environ 15 $\mu$m.

Cet essai a pour objectif de montrer l'influence de l'accord d'indice entre la couche externe supérieure et inférieure sur les propriétés optiques du vitrage telles que :

- les valeurs de transmission lumineuse $T_L$ dans le visible en %, mesurée selon la norme ISO 9050:2003 (illuminant D65 ; 2° Observateur),
- les valeurs de flou en transmission (Haze T) en %, mesuré avec un hazemeter selon la norme ASTM D 1003 pour un rayonnement incident sur l'élément en couches du côté de la couche externe inférieure,
- la clarté en % avec le hazemeter Haze-Gard de BYK.

De plus, la qualité « de vision » au travers du substrat ainsi revêtu a été évaluée visuellement par 5 observateurs à l'aveugle, c'est à dire sans que les observateurs ne connaissent les caractéristiques telles que l'indice de réfraction ou l'accord d'indice des couches sol-gel avec le substrat. Les observateurs ont attribué pour chaque substrat revêtu d'une couche sol-gel un indicateur d'appréciation choisi parmi : « - » non correcte, « + » correcte, « ++ » bon, « +++ » excellent.

Pour simplifier cet essai, la couche centrale a été omise. Cependant, l'absence de couche centrale ne modifie pas la tendance observée concernant les propriétés étudiées.

Les tableaux ci-dessous récapitulent les compositions des solutions sol-gel testées ainsi que les compositions des couches sol-gel résultantes.

Les résultats obtenus sont regroupés dans le tableau ci-dessus.

| Couche sol-gel | Indice 589nm | Δn | TL (%) | Flou (%) | Clarté (%) | Observation visuelle | | | | |
|---|---|---|---|---|---|---|---|---|---|---|
| | | | | | | P1 | P2 | P3 | P4 | P5 |
| G | 1,623 | -0,105 | - | - | 20,7 | - | - | - | - | - |
| E | 1,566 | -0,048 | - | - | 76,9 | - | - | - | - | - |
| D | 1,557 | -0,039 | - | - | 87,4 | - | + | ++ | ++ | ++ |
| P | 1,532 | -0,014 | 89,8 | 0,3 | 94 | + | + | + | ++ | ++ |
| C | 1,529 | -0,010 | - | - | 97,5 | ++ | ++ | ++ | ++ | ++ |
| O | 1,524 | -0,006 | 90,0 | 0,5 | 98 | +++ | +++ | +++ | +++ | +++ |
| B | 1,517 | 0,002 | - | - | 98 | +++ | +++ | +++ | +++ | +++ |
| N | 1,514 | 0,000 | 89,8 | 0,5 | 100 | +++ | +++ | +++ | +++ | +++ |
| M | 1,508 | 0,010 | 90,0 | 0,5 | 98 | ++ | ++ | ++ | ++ | ++ |
| L | 1,504 | 0,014 | 89,6 | 0,4 | 96 | ++ | ++ | ++ | ++ | ++ |
| K | 1,500 | 0,018 | 90,0 | 0,5 | 93 | - | + | ++ | ++ | ++ |
| A | 1,493 | 0,025 | 89,9 | 1,1 | 90 | - | - | - | - | - |
| Q | 1,484 | 0,030 | 89,5 | 1,6 | 78 | - | - | - | - | - |
| R | 1,476 | 0,038 | 89,5 | 3,5 | 68 | - | - | - | - | - |
| S | 1,468 | 0,046 | 89,5 | 2,9 | 60 | - | - | - | - | - |

Δn représente la variation d'indice entre le substrat Satinovo® et la couche sol gel.

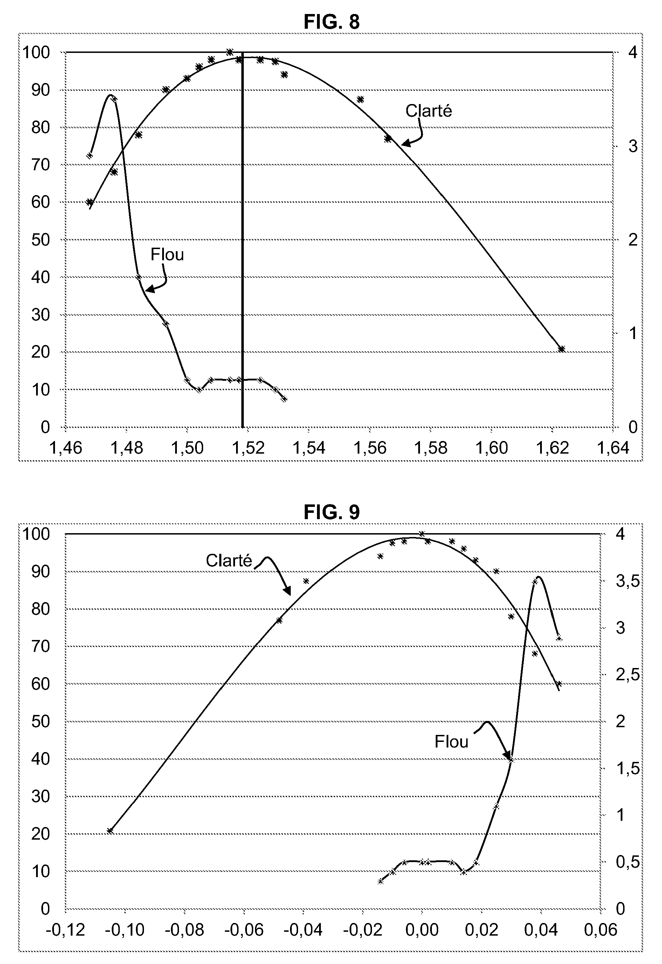

La figure 8 est un graphique montrant l'évolution du flou (axe des ordonnées situé à droite) et de la clarté (axe des ordonnées situé à gauche) en fonction de l'indice de réfraction de la couche sol-gel. Le trait noir vertical illustre l'indice du substrat de verre Satinovo®.

La figure 9 est un graphique montrant l'évolution du flou (axe des ordonnées situé à droite) et de la clarté (axe des ordonnées situé à gauche) en fonction de la variation d'indice de réfraction entre le substrat Satinovo® et la couche sol-gel.

Lorsque la couche sol-gel a un indice compris entre 1,500 et 1,530 on obtient des valeurs de flou au travers du substrat ainsi revêtu inférieures à 0,5%. Toutefois, les valeurs de flou à elles seules ne suffisent pas pour caractériser l'excellence de la vision. C'est pourquoi la clarté a également été déterminée. On constate que contrairement aux valeurs de flou qui sont quasiment constantes dans la gamme d'indice indiqué, les valeurs de clarté traduisent à l'intérieur de cette gamme un pic centré pour des valeurs d'indice de réfraction de la couche sol-gel autour de la valeur de l'indice du substrat soit 1,518. Plus particulièrement, de bons résultats sont obtenus pour un écart d'indice inférieur à 0,020 et d'excellents résultats pour un écart d'indice inférieur à 0,015, voire inférieur à 0,005.

En conclusion, la valeur absolue de la différence d'indice entre la couche externe inférieure d'indice n1 et la couche externe supérieure sol-gel d'indice n2 est de préférence inférieure à 0,020, mieux inférieure à 0,015 et encore mieux inférieure à 0,013.

**V. Influence du feuilletage**

Afin de démontrer que le feuilletage ne perturbe pas les performances optiques, des essais comparatifs ont été réalisés entre :

S1 : un substrat Satinovo® revêtu d'une couche sol-gel O,

S2 : un substrat Satinovo® revêtu d'une couche sol-gel O feuilleté avec un verre plat grâce à un intercalaire en PVB.

S3 : un substrat Satinovo® revêtu d'un intercalaire en PVB.

|     | TL (%) | Flou (%) | Clarté (%) |
| --- | --- | --- | --- |
| S1  | 90,1 | 1,88 | 92,5 |
| S2  | 88,5 | 1,22 | 99,4 |
| S3  | -    | 4,5  | 58   |

Même si de meilleurs résultats sont obtenus lorsque le substrat est non-feuilleté, les performances optiques sont bonnes dans les deux cas. Le feuilletage présente l'intérêt de « planariser » ou gommer les imperfections de la surface principale de la couche sol-gel. On obtient ainsi une surface externe complètement plate, sans aspect de vaguelette et protégée de la poussière.

Il est intéressant de noter qu'un feuilletage direct sans couche sol-gel conduit à un flou de 4,5% et une clarté de 58%, valeur totalement en dehors des bornes admissibles.

## VI. Influence de la présence de la couche magnétron

Cet essai a été réalisé avec un élément en couche transparent comprenant l'empilement suivant :

- couche externe inférieure : substrat de verre Satinovo® de 4 mm ou 6 mm,
- couche centrale : empilement de couches comprenant au moins une couche à base d'argent déposées par dépôt magnétron,
- couche externe supérieure : Couche sol-gel O,
- couche additionnelle supérieure : Intercalaire de PVB,
- couche additionnelle supérieure : verre plat de 4 mm.

La présence de la couche centrale déposée par magnétron confère à l'élément en couches un effet de flou intrinsèque provenant des réflexions sur la couche centrale. Même dans le cas d'un parfait accord d'indice, on a alors du flou. La valeur du flou dépend des propriétés de la couche centrale.

La couche sol-gel est appliquée. Enfin, l'ensemble est feuilleté en mettant en contact un intercalaire en PVB d'une épaisseur de 0,38 mm avec la couche sol gel et un verre plat Planilux®. Les verres satinés et plat ont une épaisseur de 4 mm pour les deux premiers exemples avec les couches SKN et de 6 mm pour les deux derniers.

L'empilement de couches de la couche centrale est par exemple décrit dans les demandes de brevet WO 02/48065 et EP 0 847 965. Les couches centrales, lorsqu'elles sont déposées sur une surface plane, présentent les caractéristiques données ci-dessous.

|        | TL(%) | Re% | Ri% |
| --- | --- | --- | --- |
| SKN165 | 60  | 16  | 17  |
| SKN154 | 50  | 18  | 28  |
| PB120  | 20  | 21  | 31  |
| SS108  | 8   | 42  | 37  |

Dans le tableau ci-dessous, les valeurs de flou et de clarté ont été mesurées pour différents éléments en couches comprenant comme couche centrale des empilements de couches à base d'argent déposés par magnétron. On constate alors que le flou est augmenté et peut atteindre des valeurs relativement élevées, de quelques pourcents. En revanche, la clarté quant à elle reste très forte avec des valeurs au-delà de 97%. Ceci permet d'avoir des vitrages avec une très bonne qualité de vision en transmission.

| Eléments en couches | TL (%) | Flou (%) | Clarté (%) |
| --- | --- | --- | --- |
| E1 : SKN165 | 52,7 | 4,5 | 97,8 |
| E2 : SKN154 | 46,1 | 4,3 | 97,5 |
| E3 : PB120  | 26,2 | 2,9 | 98,5 |
| E4 : SS108  | 12,4 | 3,5 | 98,1 |

**Revendications**

1. Elément en couches (1) transparent ayant deux surfaces principales externes (2A, 4A) lisses, **caractérisé en ce que** l'élément en couche comprend :

   - deux couches externes, une couche externe inférieure (2) et une couche externe supérieure (4), qui forment chacune une des deux surfaces principales externes (2A, 4A) de l'élément en couches et qui sont constituées en des matériaux diélectriques ayant sensiblement le même indice de réfraction (n2, n4), et
   - une couche centrale (3) intercalée entre les couches externes, cette couche centrale (3) étant formée soit par une couche unique qui est une couche diélectrique d'indice de réfraction (n3) différent de celui des couches externes ou une couche métallique, soit par un empilement de couches ($3_1$, $3_2$, ..., $3_k$) qui comprend au moins une couche diélectrique d'indice de réfraction différent de celui des couches externes ou une couche métallique,

   où chaque surface de contact ($S_0$, $S_1$, ..., $S_k$) entre deux couches adjacentes de l'élément en couches qui sont l'une diélectrique et l'autre métallique, ou qui sont deux couches diélectriques d'indices de réfraction différents, est texturée et parallèle aux autres surfaces de contact texturées entre deux couches adjacentes qui sont l'une diélectrique l'autre métallique ou qui sont deux couches diélectriques d'indices de réfraction différents, et
   où la couche externe supérieure (4) est une couche sol-gel comprenant une matrice hybride organique/inorganique à base de silice.

2. Elément en couches selon la revendication 1 **caractérisé en ce que** la valeur absolue de la différence d'indice de réfraction à 589 nm entre les matériaux diélectriques constitutifs des deux couches externes de l'élément en couches est inférieure ou égale à 0,020, de préférence inférieure ou égale 0,015.

3. Elément en couches selon la revendication 1 ou 2, **caractérisé en ce que** la valeur absolue de la différence d'indice de réfraction à 589 nm entre, d'une part, les couches externes (2, 4) et, d'autre part, au moins une couche diélectrique de la couche centrale (3) est supérieure ou égale à 0,3, de préférence supérieure ou égale à 0,5.

4. Elément en couches selon l'une quelconque des revendications précédentes **caractérisé en ce que** la couche sol-gel comprend en outre des particules d'au moins un oxyde métallique ou d'au moins un chalcogénure.

5. Elément en couches selon l'une quelconque des revendications précédentes **caractérisé en ce que** la matrice hybride organique/inorganique à base de silice comprend en outre au moins un oxyde métallique.

6. Elément en couches selon l'une quelconque des revendications 4 ou 5 **caractérisé en ce que** l'oxyde métallique comprend un métal choisi parmi le titane, le zirconium, le zinc, le niobium, l'aluminium et le molybdène.

7. Elément en couches selon l'une quelconque des revendications précédentes **caractérisé en ce que** la couche sol-gel comprend une matrice hybride organique/inorganique de silice et d'oxyde de zirconium dans laquelle sont dispersées des particules de dioxyde de titane.

8. Elément en couches selon l'une quelconque des revendications précédentes **caractérisé en ce que** le flou en transmission est inférieur à 5% et/ou la clarté est supérieure à 93%.

9. Elément en couches selon l'une quelconque des revendications précédentes **caractérisé en ce que** la couche sol-gel est obtenue par durcissement d'une solution sol-gel et comprend le produit résultant de l'hydrolyse et de la condensation d'au moins un organosilane de formule générale $R_nSiX_{(4-n)}$ dans laquelle :

   - n égal à 1, 2, 3, de préférence n égal 1 ou 2 et mieux n égal 1,
   - les groupes X, identiques ou différents, représentent des groupes hydrolysables choisis parmi les groupe alcoxy, acyloxy ou halogénure, de préférence alcoxy, et
   - les groupes R, identiques ou différents, représentent des groupes organiques non hydrolysables liés au silicium par un atome de carbone.

10. Elément en couches selon l'une quelconque des revendications précédentes **caractérisé en ce que** la couche sol-gel est obtenue par durcissement d'une solution sol-gel et comprend le produit résultant de l'hydrolyse et de la condensation de :

i) au moins un organosilane et

ii) au moins un précurseur d'un oxyde métallique et/ ou

iii) des particules d'au moins un oxyde métallique ou d'au moins un chalcogénure.

**11.** Elément en couches selon l'une quelconque des revendications précédentes **caractérisé en ce qu'**il comprend en outre au moins une couche additionnelle positionnée au-dessus ou en-dessous des couches externes supérieure et/ou inférieure, de préférence choisie parmi :

- les substrats transparents choisis parmi les polymères, les verres ou les céramiques comprenant deux surfaces principales lisses,
- les matériaux durcissables initialement dans un état visqueux, liquide ou pâteux adapté à des opérations de mise en forme,
- les intercalaires en matière plastique thermoformable ou sensible à la pression.

**12.** Elément en couches selon l'une quelconque des revendications précédentes **caractérisé en ce que** la couche externe inférieure de l'élément en couche est choisie parmi :

- les substrats transparents dont l'une des surfaces principales est texturée et l'autre lisse, de préférence choisis parmi les polymères, les verres, les céramiques,
- une couche de matériau diélectrique choisi parmi les oxydes, nitrures ou halogénures d'un ou plusieurs métaux de transition, non-métaux ou métaux alcal ino-terreux,
- une couche à base de matériaux durcissables initialement dans un état visqueux, liquide ou pâteux adaptés à des opérations de mise en forme comprenant :

    - les matériaux photoréticulables et/ou photopolymérisables,
    - les couches déposées par un procédé sol-gel,

- les intercalaires en matière plastique thermoformable ou sensible à la pression pouvant être de préférence à base de polymères choisis parmi les polybutyrales de vinyle (PVB), les polychlorures de vinyle (PVC), les polyuréthanes (PU), les polyéthylènes téréphtalates (PET) ou les copolymères d'éthylène-acétate de vinyle (EVA).

**13.** Elément en couches selon l'une quelconque des revendications précédentes **caractérisé en ce que** la couche ou l'empilement de couches de la couche centrale comprend :

- au moins une couche mince constituée en un matériau diélectrique choisi parmi les oxydes, nitrures ou halogénures d'un ou plusieurs métaux de transition, non-métaux ou métaux alcalino-terreux,
- au moins une couche mince métallique, notamment une couche mince d'argent, d'or, de cuivre, de titane, de niobium, de silicium, d'aluminium, d'alliage nickel-chrome (NiCr), d'acier inoxydable, ou de leurs alliages.

**14.** Procédé de fabrication d'un élément en couches tel que défini selon l'une quelconque des revendications 1 à 13, comprenant les étapes suivantes :

- on fournit, en tant que couche externe inférieure, un substrat transparent dont l'une des surfaces principales est texturée et l'autre surface principale est lisse ;
- on dépose une couche centrale sur la surface principale texturée de la couche externe inférieure, soit, lorsque la couche centrale est formée par une couche unique, qui est une couche diélectrique d'indice de réfraction différent de celui de la couche externe inférieure ou une couche métallique, en déposant la couche centrale de manière conforme sur ladite surface principale texturée, soit, lorsque la couche centrale est formée par un empilement de couches comprenant au moins une couche diélectrique d'indice de réfraction différent de celui de la couche externe inférieure ou une couche métallique, en déposant les couches de la couche centrale successivement de manière conforme sur ladite surface principale texturée ;
- on forme la couche externe supérieure sol-gel sur la surface principale texturée de la couche centrale opposée à la couche externe inférieure, où les couches externes inférieure et supérieure sont constituées en des matériaux diélectriques ayant sensiblement le même indice de réfraction, par dépôt par procédé sol-gel,
- éventuellement on forme au moins une couche additionnelle supérieure et/ou inférieure sur la ou les surfaces principales externes lisses de l'élément en couches.

**15.** Utilisation d'un élément en couches (1) selon l'une quelconque des revendications 1 à 13 comme tout ou partie d'un vitrage pour véhicule, pour bâtiment, pour mobilier urbain, pour ameublement intérieur, pour écran d'affichage, pour système Head Up Display.

**Patentansprüche**

**1.** Transparentes Schichtenelement (1), das zwei glatte äußere Hauptflächen (2A, 4A) aufweist, **dadurch gekennzeichnet, dass** das Schichtenelement umfasst:

- zwei Außenschichten, eine untere Außenschicht (2) und eine obere Außenschicht (4), die jeweils eine der beiden äußeren Hauptflächen (2A, 4A) des Schichtenelements bilden und die aus dielektrischen Materialien, welche im Wesentlichen den gleichen Brechungsindex (n2, n4) aufweisen, gebildet sind, und
- eine mittlere Schicht (3), die zwischen den Außenschichten eingefügt ist, wobei diese mittlere Schicht (3) entweder durch eine einzige Schicht, welche eine dielektrische Schicht mit einem Brechungsindex (n3), der von demjenigen der Außenschichten verschieden ist, oder eine metallische Schicht ist, oder durch einen Stapel aus Schichten ($3_1$, $3_2$, ..., $3_k$), welcher wenigstens eine dielektrische Schicht mit einem Brechungsindex, der von demjenigen der Außenschichten verschieden ist, oder eine metallische Schicht umfasst, gebildet ist,

wobei jede Kontaktfläche ($S_0$, $S_1$, ..., $S_k$) zwischen zwei benachbarten Schichten des Schichtenelements, von denen die eine dielektrisch und die andere metallisch ist, oder die zwei dielektrische Schichten mit unterschiedlichen Brechungsindizes sind, strukturiert ist und zu den anderen strukturierten Kontaktflächen zwischen zwei benachbarten Schichten, von denen die eine dielektrisch, die andere metallisch ist oder die zwei dielektrische Schichten mit unterschiedlichen Brechungsindizes sind, parallel verläuft, und
wobei die obere Außenschicht (4) eine Sol-Gel-Schicht ist, die eine organische / anorganische Hybridmatrix auf der Basis von Siliziumdioxid umfasst.

**2.** Schichtenelement nach Anspruch 1, **dadurch gekennzeichnet, dass** der absolute Wert des Unterschiedes im Brechungsindex bei 589 nm zwischen den dielektrischen Materialien, die die beiden äußeren Schichten des Schichtenelements bilden, kleiner als oder gleich 0,020, vorzugsweise kleiner als oder gleich 0,015 ist.

**3.** Schichtenelement nach Anspruch 1 oder 2, **dadurch gekennzeichnet, dass** der absolute Wert des Unterschiedes im Brechungsindex bei 589 nm zwischen einerseits den äußeren Schichten (2, 4) und andererseits wenigstens einer dielektrischen Schicht der mittleren Schicht (3) größer als oder gleich 0,3, vorzugsweise größer als oder gleich 0,5 ist.

**4.** Schichtenelement nach einem der vorhergehenden Ansprüche, **dadurch gekennzeichnet, dass** die Sol-Gel-Schicht ferner Partikel von wenigstens einem Metalloxid oder von wenigstens einem Chalkogenid umfasst.

**5.** Schichtenelement nach einem der vorhergehenden Ansprüche, **dadurch gekennzeichnet, dass** die organische / anorganische Hybridmatrix auf der Basis von Siliziumdioxid ferner wenigstens ein Metalloxid umfasst.

**6.** Schichtenelement nach einem der Ansprüche 4 oder 5, **dadurch gekennzeichnet, dass** das Metalloxid ein Metall, das aus Titan, Zirkonium, Zink, Niob, Aluminium und Molybdän ausgewählt ist, umfasst.

**7.** Schichtenelement nach einem der vorhergehenden Ansprüche, **dadurch gekennzeichnet, dass** die Sol-Gel-Schicht eine organische / anorganische Hybridmatrix aus Siliziumdioxid und aus Zirkonoxid umfasst, in der Titandioxid-Partikel verteilt sind.

**8.** Schichtenelement nach einem der vorhergehenden Ansprüche, **dadurch gekennzeichnet, dass** die Durchlässigkeitsunschärfe weniger als 5 % beträgt und/oder die Klarheit mehr als 93 % beträgt.

**9.** Schichtenelement nach einem der vorhergehenden Ansprüche, **dadurch gekennzeichnet, dass** die Sol-Gel-Schicht durch Härten einer Sol-Gel-Lösung erhalten wird und das Produkt, welches aus der Hydrolyse und aus der Kondensation wenigstens eines Organosilans der allgemeinen Formel $R_nSiX_{(4-n)}$ hervorgeht, umfasst, worin:

- n gleich 1, 2, 3 ist, wobei vorzugsweise n gleich 1 oder 2 und besser n gleich 1 ist,
- die Gruppen X, die gleich oder unterschiedlich sind, hydrolysierbare Gruppen, welche aus den Alkoxy-, Acyloxy- oder Halogenid-, vorzugsweise Alkoxygruppen ausgewählt sind, darstellen, und
- die Gruppen R, die gleich oder unterschiedlich sind, nicht hydrolysierbare organische Gruppen, die mit dem Silizium durch ein Kohlenstoffatom verbunden sind, darstellen.

**10.** Schichtenelement nach einem der vorhergehenden Ansprüche, **dadurch gekennzeichnet, dass** die Sol-Gel-Schicht durch Härten einer Sol-Gel-Lösung erhalten wird und das Produkt umfasst, welches aus der Hydrolyse und aus der Kondensation hervorgeht von:

i) wenigstens einem Organosilan und
ii) wenigstens einem Vorläufer eines Metalloxids und/oder
iii) den Partikeln von wenigstens einem Metalloxid oder von wenigstens einem Chalkogenid.

**11.** Schichtenelement nach einem der vorhergehenden Ansprüche, **dadurch gekennzeichnet, dass** es ferner wenigstens eine zusätzliche Schicht, welche oberhalb oder unterhalb der oberen und/oder der unteren Außenschicht angeordnet ist, umfasst, die vorzugsweise ausgewählt ist aus:

- den transparenten Substraten, ausgewählt aus den Polymeren, den Gläsern oder den Keramiken, die zwei glatte Hauptflächen umfassen,
- den anfangs in einem viskosen, flüssigen oder pastenartigen Zustand befindlichen, härtbaren Materialien, die sich für Formgebungsvorgänge eignen,
- den Zwischenschichten aus thermoformbarem oder druckempfindlichem Kunststoff.

**12.** Schichtenelement nach einem der vorhergehenden Ansprüche, **dadurch gekennzeichnet, dass** die untere Außenschicht des Schichtenelements ausgewählt ist aus:

- den transparenten Substraten, von denen die eine der Hauptflächen strukturiert und die andere glatt ist, vorzugsweise ausgewählt aus den Polymeren, den Gläsern, den Keramiken,
- einer Schicht aus dielektrischem Material, ausgewählt aus den Oxiden, Nitriden oder Halogeniden von einem oder mehreren Übergangsmetallen, Nichtmetallen oder Erdalkalimetallen,
- einer Schicht auf der Basis von anfangs in einem viskosen, flüssigen oder pastenartigen Zustand befindlichen, härtbaren Materialien, die sich für Formgebungsvorgänge eignen, umfassend:

- die photovernetzbaren und/oder photopolymerisierbaren Materialien,
- die mittels eines Sol-Gel-Verfahrens abgeschiedenen Schichten,

- den Zwischenschichten aus thermoformbarem oder druckempfindlichem Kunststoff, die vorzugsweise auf der Basis von Polymeren, ausgewählt aus den Polyvinylbutyralen (PVB), den Polyvinylchloriden (PVC), den Polyurethanen (PU), den Polyethylenterephthalaten (PET) oder den Ethylenvinylacetatcopolymeren (EVA), sein können.

**13.** Schichtenelement nach einem der vorhergehenden Ansprüche, **dadurch gekennzeichnet, dass** die Schicht oder der Schichtenstapel der mittleren Schicht umfasst:

- wenigstens eine dünne Schicht, die aus einem dielektrischen Material, ausgewählt aus den Oxiden, Nitriden oder Halogeniden von einem oder mehreren Übergangsmetallen, Nichtmetallen oder Erdalkalimetallen, besteht,
- wenigstens eine dünne Metallschicht, insbesondere eine dünne Schicht aus Silber, Gold, Kupfer, Titan, Niob, Silizium, Aluminium, NickelChrom (NiCr)-Legierung, rostfreiem Stahl oder ihren Legierungen.

**14.** Verfahren zur Herstellung eines Schichtenelements, wie es nach einem der Ansprüche 1 bis 13 definiert ist, umfassend die folgenden Schritte:

- Bereitstellen eines transparenten Substrats als untere Außenschicht, von dem eine der Hauptflächen strukturiert und die andere Hauptfläche glatt ist;
- Abscheiden einer mittleren Schicht auf der strukturierten Hauptfläche der unteren Außenschicht, entweder, wenn die mittlere Schicht durch eine einzige Schicht gebildet ist, welche eine dielektrische Schicht mit einem Brechungsindex, der von demjenigen der unteren Außenschicht verschieden ist, oder eine metallische Schicht ist, dadurch, dass die mittlere Schicht auf der strukturierten Hauptfläche entsprechend abgeschieden wird, oder, wenn die mittlere Schicht durch einen Stapel aus Schichten gebildet ist, welcher wenigstens eine dielektrische Schicht mit einem Brechungsindex, der von demjenigen der unteren Außenschicht verschieden ist, oder eine metallische Schicht umfasst, dadurch, dass die Schichten der mittleren Schicht nacheinander entsprechend auf der strukturierten Hauptfläche abgeschieden werden;

- Ausbilden der oberen Sol-Gel-Außenschicht auf der strukturierten Hauptfläche der mittleren Schicht, welche der unteren Außenschicht gegenüberliegt, wobei die untere und die obere Außenschicht aus dielektrischen Materialien, die im Wesentlichen den gleichen Brechungsindex aufweisen, durch Abscheiden mittels Sol-Gel-Verfahren gebildet sind,

- eventuell Ausbilden wenigstens einer zusätzlichen oberen und/oder unteren Schicht, auf der oder den glatten äußeren Hauptflächen des Schichtenelements.

15. Verwendung eines Schichtenelements (1) nach einem der Ansprüche 1 bis 13, als Ganzes oder Teil einer Verglasung für Fahrzeuge, für Gebäude, für Straßeneinrichtungen, für Inneneinrichtungen, für Bildschirme, für Head-up-Display-Systeme.

**Claims**

1. A transparent layered element (1) having two main smooth outer surfaces (2A, 4A), **characterized in that** the layered element comprises:

   - two outer layers, a lower outer layer (2) and an upper outer layer (4), which each form one of the two main outer surfaces (2A, 4A) of the layered element and which consist of dielectric materials having substantially the same refractive index (n2, n4), and
   - a central layer (3) intercalated between the outer layers, this central layer (3) being formed either by a single layer which is a dielectric layer of refractive index (n3) different from that of the outer layers or a metallic layer, or by a stack of layers ($3_1$, $3_2$, ..., $3_k$) which comprises at least one dielectric layer with a refractive index different to that of the outer layers or a metallic layer,

   in which each contact surface (So, $S_1$, ..., $S_k$) between two adjacent layers of the layered element, one of which is a dielectric and the other metallic, or which are both dielectric layers of different refractive indices, is textured and parallel to the other textured contact surfaces between two adjacent layers, one of which is a dielectric and the other metallic or which are both dielectric layers with different refractive indices, and
   in which the upper outer layer (4) is a sol-gel layer comprising an organic/inorganic hybrid matrix based on silica.

2. The layered element as claimed in claim 1, **characterized in that** the absolute value of the difference in refractive index at 589 nm between the constituent dielectric materials of the two outer layers of the layered element is less than or equal to 0.020 and preferably less than or equal to 0.015.

3. The layered element as claimed in claim 1 or 2, **characterized in that** the absolute value of the difference in refractive index at 589 nm between, on the one hand, the outer layers (2, 4) and, on the other hand, at least one dielectric layer of the central layer (3) is greater than or equal to 0.3 and preferably greater than or equal to 0.5.

4. The layered element as claimed in any one of the preceding claims, **characterized in that** the sol-gel layer also comprises particles of at least one metal oxide or of at least one chalcogenide.

5. The layered element as claimed in any one of the preceding claims, **characterized in that** the silica-based organic/inorganic hybrid matrix also comprises at least one metal oxide.

6. The layered element as claimed in either of claims 4 and 5, **characterized in that** the metal oxide comprises a metal chosen from titanium, zirconium, zinc, niobium, aluminum and molybdenum.

7. The layered element as claimed in any one of the preceding claims, **characterized in that** the sol-gel layer comprises an organic/inorganic hybrid matrix of silica and of zirconium oxide in which are dispersed titanium dioxide particles.

8. The layered element as claimed in any one of the preceding claims, **characterized in that** the transmission haze is less than 5% and/or the lightness is greater than 93%.

9. The layered element as claimed in any one of the preceding claims, **characterized in that** the sol-gel layer is obtained by curing a sol-gel solution and comprises the product resulting from the hydrolysis and condensation of at least one organosilane of general formula $R_nSiX_{(4-n)}$ in which:

- n is equal to 1, 2, 3, preferably n is equal to 1 or 2 and better still n is equal to 1,
- the groups X, which may be identical or different, represent hydrolyzable groups chosen from alkoxy, acyloxy or halide groups, preferably alkoxy, and
- the groups R, which may be identical or different, represent non-hydrolyzable organic groups bonded to silicon via a carbon atom.

10. The layered element as claimed in any one of the preceding claims, **characterized in that** the sol-gel layer is obtained by curing a sol-gel solution and comprises the product resulting from the hydrolysis and condensation of:

i) at least one organosilane and
ii) at least one precursor of a metal oxide and/or
iii) particles of at least one metal oxide or of at least one chalcogenide.

11. The layered element as claimed in any one of the preceding claims, **characterized in that** it also comprises at least one additional layer positioned above or below the upper and/or lower outer layers, preferably chosen from:

- transparent substrates chosen from polymers, glasses and ceramics comprising two smooth main surfaces,
- curable materials that are initially in a viscous, liquid or pasty state suitable for forming operations,
- inserts made of thermoformable or pressure-sensitive plastic material.

12. The layered element as claimed in any one of the preceding claims, **characterized in that** the lower outer layer of the layered element is chosen from:

- transparent substrates, one of the main surfaces of which is textured and the other smooth, preferably chosen from polymers, glasses and ceramics,
- a layer of dielectric material chosen from the oxides, nitrides or halides of one or more transition metals, non-metals or alkaline-earth metals,
- a layer based on curable materials that are initially in a viscous, liquid or pasty state, suited to forming operations comprising:

- photocrosslinkable and/or photopolymerizable materials,
- layers deposited via a sol-gel process,

- inserts made of thermoformable or pressure-sensitive plastic material which may preferably be based on polymers chosen from polyvinyl butyrals (PVB), polyvinyl chlorides (PVC), polyurethanes (PU), polyethylene terephthalates (PET) or ethylene-vinyl acetate (EVA) copolymers.

13. The layered element as claimed in any one of the preceding claims, **characterized in that** the layer or the stack of layers of the central layer comprises:

- at least one thin layer consisting of a dielectric material chosen from the oxides, nitrides or halides of one or more transition metals, non-metals or alkaline-earth metals,
- at least one thin metallic layer, especially a thin layer of silver, gold, copper, titanium, niobium, silicon, aluminum, nickel-chromium (NiCr) alloy, stainless steel, or an alloy thereof.

14. A process for manufacturing a layered element as defined according to any one of claims 1 to 13, comprising the following steps:

- a transparent substrate, one of the main surfaces of which is textured and the other main surface is smooth, is provided as lower outer layer;
- a central layer is deposited on the main textured surface of the lower outer layer, i.e. when the central layer is formed by a single layer, which is a dielectric layer with a refractive index different from that of the lower outer layer or a metallic layer, by depositing the central layer in compliant manner onto said main textured surface, or when the central layer is formed by a stack of layers comprising at least one dielectric layer with a refractive index different from that of the lower outer layer or a metallic layer, by depositing the layers of the central layer successively in compliant manner onto said main textured surface;
- the upper outer sol-gel layer is formed on the main textured surface of the central layer opposite the lower outer layer, where the lower and upper outer layers consist of dielectric materials having substantially the same refractive index, by deposition via a sol-gel process,
- optionally at least one upper and/or lower additional layer is formed on the main outer smooth surface(s) of the layered element.

15. The use of a layered element (1) as claimed in any one of claims 1 to 13, as all or part of glazing for a vehicle, for a building, for street furniture, for interior furniture, for a display screen or for a head-up display system.

Fig.1

Fig.2

Fig.3

Fig.4

Fig.5

## FIG. 6

## FIG. 7

## FIG. 8

## FIG. 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0248065 A

- EP 0847965 A